# EUROPEAN PATENT SPECIFICATION

(11) **EP 4 206 847 B1**
(45) Date of publication and mention of the grant of the patent: **28.08.2024**
(21) Application number: 22206588.0
(22) Date of filing: 10.11.2022
(51) Int. Cl.: G05D 1/00

(54) **CONTROL METHOD FOR MOBILE OBJECT, MOBILE OBJECT, AND COMPUTER-READABLE STORAGE MEDIUM**
STEUERUNGSVERFAHREN FÜR EIN MOBILES OBJEKT, MOBILES OBJEKT UND COMPUTERLESBARES SPEICHERMEDIUM
PROCÉDÉ DE COMMANDE POUR OBJET MOBILE, OBJET MOBILE ET SUPPORT D'INFORMATIONS LISIBLE PAR ORDINATEUR

(30) Priority: 28.12.2021 JP 2021214918
(43) Date of publication of application: 05.07.2023
(73) Proprietor: Mitsubishi Logisnext Co., Ltd., Nagaokakyo-shi Kyoto 617-8585 (JP)
(72) Inventor: TAKAO, Kenji, Tokyo, 100-8332 (JP)
(74) Representative: Studio Torta S.p.A.

(56) References cited:
- US-A1- 2021 271 246
- US-A1- 2021 309 501

## Description

### Field

The present disclosure relates to a control method for a mobile object, a mobile object, and a computer-readable storage medium.

### Background

For example, there is known a technique of causing a mobile object such as a forklift to automatically move. Normally, such a mobile object moves while successively detecting a self-position. Japanese Patent Application Laid-open No. H1-302408 discloses a palette conveyance vehicle that conveys a pallet while recognizing a self-position by detecting a sign disposed on a floor or a ceiling of a workplace.
Document US 2021/271246 A1 relates to an arithmetic device, a movement control system, a control device, a moving object, a calculation method, and a computer-readable storage medium.

### Summary

### Technical Problem

Herein, a mobile object may approach a parked transport vehicle at the time of unloading or loading an object from/onto the transport vehicle. The transport vehicle is parked in a parking region set in advance, but the mobile object cannot appropriately approach the transport vehicle in some cases due to a shift of a parking position in the parking region.

The present disclosure is intended to solve the problem described above, and an object of the present disclosure is to provide a control method for a mobile object, a mobile object, and a computer-readable storage medium that can appropriately approach a transport vehicle
parked in a parking region.

### Solution to Problem

To solve the above problem and achieve the object, a control method according to the present disclosure is for a mobile object that automatically moves. The control method includes: acquiring positional information on a transport vehicle parked in a parking region, the positional information including information on a position of a rear end portion of the transport vehicle, information on an attitude of the transport vehicle, and information on a length of the transport vehicle; setting a first path toward the transport vehicle based on the positional information on the transport vehicle; and causing the mobile object to move along the first path.

To solve the above problem and achieve the object, a mobile object according to the present disclosure automatically moves, and includes: a first path acquisition unit configured to acquire a first path toward a transport vehicle parked in a parking region, the first path being set based on positional information on the transport vehicle including information on a position of a rear end portion of the transport vehicle, information on an attitude of the transport vehicle, and information on a length of the transport vehicle; and a movement control unit configured to cause the mobile object to move along the first path.

To solve the above problem and achieve the object, a non-transitory computer-readable storage medium according to the present disclosure stores a computer program for causing a computer to perform a control method for a mobile object that automatically moves. The computer program includes: acquiring a first path toward a transport vehicle parked in a parking region, the first path being set based on positional information on the transport vehicle including information on a position of a rear end portion of the transport vehicle, information on an attitude of the transport vehicle, and information on a length of the transport vehicle; and causing the mobile object to move along the first path.

### Advantageous Effects of Invention

According to the present disclosure, it is possible to appropriately approach a transport vehicle parked in a parking region.

### Brief Description of Drawings

FIG. 1 is a schematic diagram of a movement control system according to an embodiment.
FIG. 2 is a schematic diagram for explaining a transport vehicle.
FIG. 3 is a schematic diagram of a configuration of a mobile object.
FIG. 4 is a schematic block diagram of a management system.
FIG. 5 is a schematic block diagram of an information processing device.
FIG. 6 is a schematic diagram for explaining a first path.
FIG. 7 is a schematic block diagram of a control device for the mobile object.
FIG. 8 is a schematic diagram for explaining a second path.
FIG. 9 is a flowchart for explaining a processing flow according to the present embodiment.
FIG. 10 is a schematic diagram illustrating another example of a method of acquiring a length of the transport vehicle.
FIG. 11 is a schematic diagram illustrating another example of a method of acquiring positional information on the transport vehicle.
FIG. 12 is a schematic diagram illustrating another example of a method of acquiring positional information on the transport vehicle.
FIG. 13 is a schematic diagram illustrating another example of a method of acquiring position and attitude information on a target object.

### Description of Embodiments

The following describes a preferred embodiment of the present disclosure in detail with reference to the attached drawings. The present disclosure is not limited to the embodiment. In a case in which there are a plurality of embodiments, the present disclosure encompasses a combination of the embodiments.

### Entire configuration of movement control system

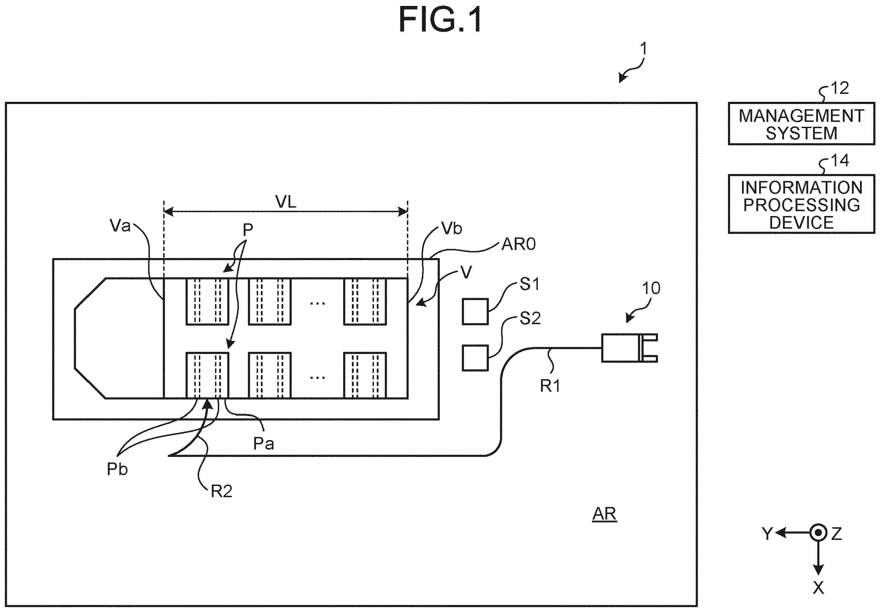

FIG. 1 is a schematic diagram of a movement control system according to the present embodiment. As illustrated in FIG. 1, a movement control system 1 according to the present embodiment includes a mobile object 10, a management system 12, and an information processing device 14. The movement control system 1 is a system that controls movement of the mobile object 10 belonging to a facility W. The facility W is, for example, a facility such as a warehouse in which physical distribution is managed. In the movement control system 1, the mobile object 10 approaches a transport vehicle V parked in a parking region ARC in the facility W. The transport vehicle V is a mobile object that transports a target object P mounted thereon in a section inside or outside the facility W. The transport vehicle V may arrive at the facility W in a state in which the target object P is mounted thereon, or move to another place after the target object P is mounted thereon in the facility W. The transport vehicle V is a truck in the present embodiment, but is not limited thereto. For example, the transport vehicle V may be an optional mobile object that conveys the target object P such as a railway vehicle. In the present embodiment, the target object P is an object to be conveyed in which a load is mounted on a palette. An opening Pb is formed on a front surface Pa of the target object P, the opening Pb into which a fork 24 (described later) of the mobile object 10 is inserted. However, the target object P may have an optional form instead of the palette on which the load is mounted. For example, the target object P may be the load alone without the palette. Hereinafter, a floor face of the facility W is assumed to be a region AR, a direction along the region AR is assumed to be a direction X (first direction), and a direction along the region AR and intersecting with the direction X is assumed to be a direction Y (second direction). In the present embodiment, the direction Y is a direction orthogonal to the direction X. Each of the direction X and the direction Y may also be referred to as a direction along a horizontal plane. A direction orthogonal to the direction X and the direction Y, more specifically, a direction toward an upper side of a vertical direction is assumed to be a direction Z.

### Transport vehicle

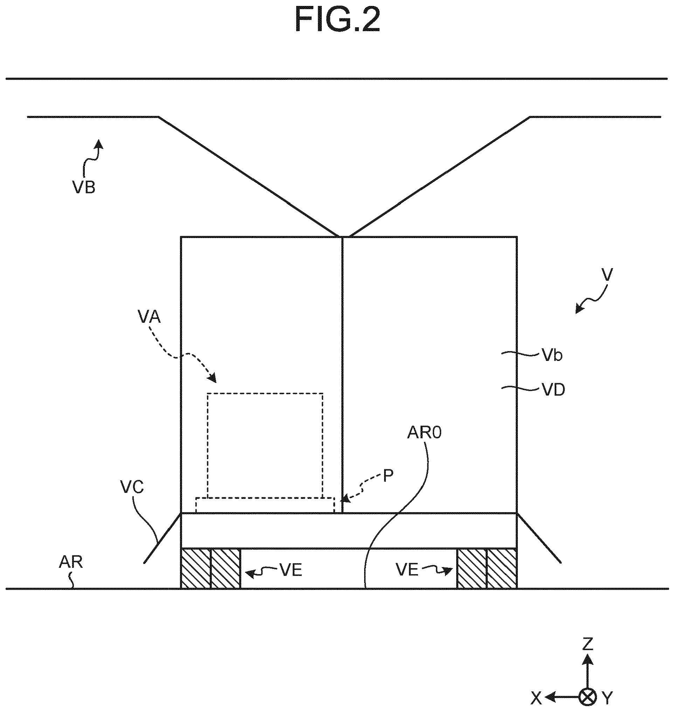

The following describes the transport vehicle V more specifically. FIG. 2 is a schematic diagram for explaining the transport vehicle. FIG. 2 is a schematic diagram of the transport vehicle V parked in the parking region ARC viewed from a rear end side of the transport vehicle V. As illustrated in FIG. 2, a storage chamber VA, lateral doors VB, a flap part VC, a rear door VD, and tires VE are disposed on the transport vehicle V. The storage chamber VA, which is formed on a load-carrying platform of the vehicle V, is a space in which the target object P is stored. The lateral door VB is a door disposed on a lateral side of the storage chamber VA. When the lateral door VB is released, the storage chamber VA communicates with the outside, and the target object P can be carried therein or carried out therefrom. In the present embodiment, the lateral doors VB are disposed on both lateral sides, but the embodiment is not limited thereto. The lateral door VB may be disposed only on one of the lateral sides. The flap part VC is a gate disposed in the vicinity of a bottom surface on the lateral side of the storage chamber VA. The rear door VD is a door that is disposed on a rear side of the storage chamber VA, that is, at a rear end in a front and rear direction of the transport vehicle V. When the rear door VD is opened, the storage chamber VA also communicates with the outside, and the target object P can be carried out therefrom. In the present embodiment, the lateral doors VB are opened, and the mobile object 10 approaches the transport vehicle V from both lateral sides to load and unload the target object P from both lateral sides. However, the embodiment is not limited thereto. For example, the target object P may be loaded and unloaded only from one of the lateral sides of the transport vehicle V, or the target object P may be loaded and unloaded from a rear side of the transport vehicle V. The configuration of the transport vehicle V is not limited to that illustrated in FIG. 2.

### Parking region AR0

The following describes the parking region ARC illustrated in FIG. 1 more specifically. The parking region ARC, which is disposed in the region AR of the facility W, is a region for parking the transport vehicle V. In the parking region ARC, the transport vehicle V is preferably parked not to extend off the parking region ARC. There is one parking region ARC in the example of FIG. 1, but a plurality of the parking regions AR0 may be disposed.

The parking region ARC is set in advance as a region in which the transport vehicle V should be parked. That is, a position (coordinates), a shape, and a size of the parking region AR0 are set in advance, and the parking region ARC may be marked out by a white line and the like, for example. The parking region ARC is preferably set to have a shape and a size so that orientation of the transport vehicle V parked in the parking region ARC can be defined. In the present embodiment, the parking region ARC is set to have a shape and a size so that, in a case in which the transport vehicle V is parked in the parking region AR0, a direction from a rear end toward a front end of the transport vehicle V is oriented toward the direction Y side. For example, in the example of FIG. 1, the parking region ARC is a region having a rectangular shape extending along the direction X and the direction Y, and is set so that a length in the direction Y is longer than a length in the direction X. Due to this, the transport vehicle V, which is longer in the front and rear direction than in a right and left direction, is parked in the parking region ARC so that the direction from the rear end toward the front end of the transport vehicle V is oriented toward the direction Y side. Accordingly, in the parking region ARC, one of the lateral sides of the transport vehicle V is oriented toward the direction X and the other one of the lateral sides thereof is oriented toward the opposite side of the direction X, and the mobile object 10 approaches the transport vehicle V from the direction X side or the opposite side of the direction X.

In the storage chamber VA of the transport vehicle V, a plurality of the target objects P are disposed along the front and rear direction of the transport vehicle V (direction from the rear end toward the front end of the transport vehicle V). Thus, in the parking region ARC, the target objects P are disposed side by side in the direction Y in the storage chamber VA. In the present embodiment, in the storage chamber VA, the target objects P are disposed side by side also in the right and left direction of the vehicle V (in the X-direction in the parking region ARC). In the example of FIG. 1, in the parking region ARC, two rows of the target objects P arranged side by side in the direction Y are disposed in the direction X. Each of the target objects P is disposed so that the front surface Pa thereof faces an outer side in the right and left direction of the transport vehicle V. That is, it can be said that each of the target objects P is disposed so that the front surface Pa faces a direction in which the mobile object 10 approaches (faces the direction X side or the opposite side of the direction X) in the parking region AR0. For example, the target object P in the row on the direction X side is disposed so that the front surface Pa thereof faces the direction X side, and the target object P in the row on the opposite side of the direction X is disposed so that the front surface Pa thereof faces the opposite side of the direction X. However, arrangement, the number, and orientation of the front surface Pa of the target object P are not limited to the above description, but may be optional.

### Mobile object

The mobile object 10 is a device that can automatically move. In the present embodiment, the mobile object 10 is a forklift, more specifically, what is called an Automated Guided Vehicle (AGV) or an Automated Guided Forklift (AGF). As exemplified in FIG. 1, the mobile object 10 moves on the region AR in the facility W. The mobile object 10 approaches the transport vehicle V parked in the parking region ARC, unloads (picks up) the target object P mounted on the transport vehicle V, or loads (drops) the target object P mounted thereon onto the transport vehicle V. Hereinafter, exemplified is a case in which the mobile object 10 approaches the transport vehicle V from the X-direction side of the parking region ARC, and unloads the target object P mounted on the transport vehicle V.

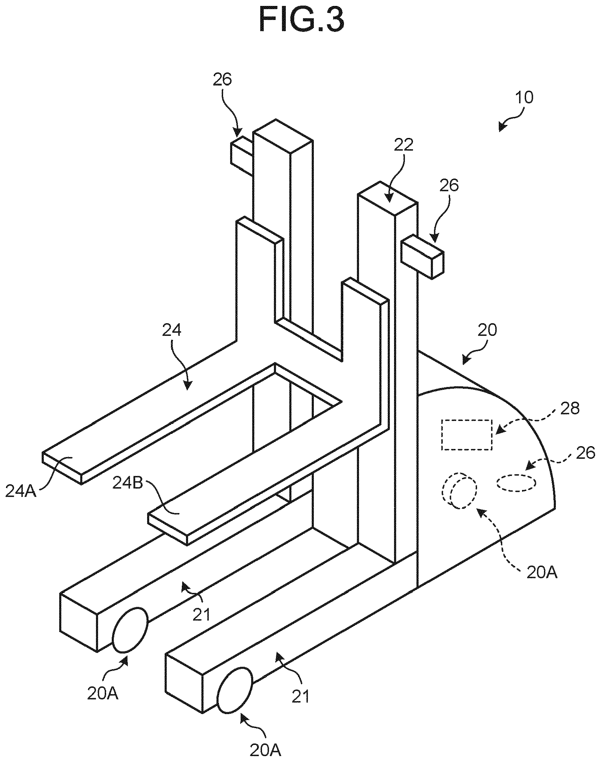

FIG. 3 is a schematic diagram of a configuration of the mobile object. As illustrated in FIG. 3, the mobile object 10 includes a vehicle body 20, wheels 20A, straddle legs 21, a mast 22, the fork 24, sensors 26, and a control device 28. The straddle legs 21 are a pair of axial members projecting from the vehicle body 20 disposed on one end part in a front and rear direction of the vehicle body 20. The wheels 20A are disposed on distal ends of the respective straddle legs 21 and the vehicle body 20. That is, the three wheels 20A are disposed in total, but positions and the number of the wheels 20A may be optional. The mast 22 is attached to the straddle leg 21 in a movable manner, and moves in the front and rear direction of the vehicle body 20. The mast 22 extends along an upper and lower direction (the direction Z herein) orthogonal to the front and rear direction. The fork 24 is attached to the mast 22 in a manner movable in the direction Z. The fork 24 may also be movable in a lateral direction (a direction intersecting with the upper and lower direction and the front and rear direction) of the vehicle body 20 with respect to the mast 22. The fork 24 includes a pair of hooks 24A and 24B. The hooks 24A and 24B extend toward a front direction of the vehicle body 20 from the mast 22. The hook 24A and the hook 24B are disposed to be separated from each other in a lateral direction of the mast 22. Hereinafter, regarding the front and rear direction, a direction toward a side on which the fork 24 is arranged in the mobile object 10 is assumed to be a front direction, and a direction toward a side on which the fork 24 is not arranged is assumed to be a rear direction.

Each of the sensors 26 detects at least one of a position and an attitude of an object that is present around the vehicle body 20. It can also be said that the sensor 26 detects a position of the object with respect to the mobile object 10 and the attitude of the object with respect to the mobile object 10. In the present embodiment, the sensors 26 are disposed on side surfaces of the mast 22 and on a rear direction side of the vehicle body 20. However, the positions at which the sensors 26 are disposed are not limited thereto. The sensors 26 may be disposed at optional positions, and the number of the sensors 26 to be disposed may also be optional. For example, a safety sensor installed on the mobile object 10 may also be used as the sensor 26. By using the safety sensor as the sensor 26, a new sensor is not required to be disposed.

The sensor 26 is, for example, a sensor that emits laser light. The sensor 26 emits laser light while performing scanning in one direction (herein, a lateral direction), and detects the position and orientation of the object from reflected light of the emitted laser light. That is, the sensor 26 can be assumed to be what is called a two-dimensional (2D)-Light Detection And Ranging (LiDAR). However, the sensor 26 is not limited thereto, and may be a sensor that detects the object using an optional method. For example, the sensor 26 may be what is called a three-dimensional (3D)-LiDAR that scans in a plurality of directions, or may be a camera.

The control device 28 controls movement of the mobile object 10. The control device 28 will be described later.

### Management System

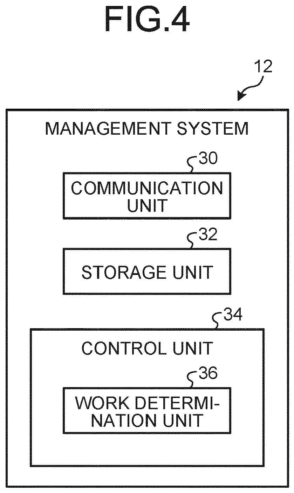

FIG. 4 is a schematic block diagram of the management system. The management system 12 is a system that manages physical distribution in the facility W. The management system 12 is a Warehouse Management System (WMS) in the present embodiment, but is not limited to the WMS, and may be an optional system. For example, the management system 12 may be a back-end system such as another production management system. A position at which the management system 12 is disposed is optional. The management system 12 may be disposed in the facility W, or may be disposed at a position distant from the facility W to manage the facility W from the distant position. The management system 12 is a computer, and includes a communication unit 30, a storage unit 32, and a control unit 34 as illustrated in FIG. 4.

The communication unit 30 is a module that is used by the control unit 34 to communicate with an external device such as the information processing device 14, and may include an antenna and the like, for example. A communication scheme used by the communication unit 30 is wireless communication in the present embodiment, but the communication scheme may be optional. The storage unit 32 is a memory that stores various kinds of information such as a computer program or arithmetic content of the control unit 34, and includes at least one of a random access memory (RAM), a main storage device such as a read only memory (ROM), and an external storage device such as a hard disk drive (HDD), for example.

The control unit 34 is an arithmetic device, and includes an arithmetic circuit such as a central processing unit (CPU), for example. The control unit 34 includes a work determination unit 36. The control unit 34 implements the work determination unit 36 by reading out, from the storage unit 32, and executing a computer program (software), and performs processing thereof. The control unit 34 may perform the processing with one CPU, or may include a plurality of CPUs and perform the processing with the CPUs. The work determination unit 36 may be implemented with a hardware circuit. A computer program for the control unit 34 stored in the storage unit 32 may be stored in a (non-transitory) computer-readable storage medium that can be read by the management system 12.

The work determination unit 36 determines the target object P as an object to be conveyed. Specifically, the work determination unit 36 determines work content indicating information on the target object P as the object to be conveyed based on an input work plan, for example. It can also be said that the work content is information for specifying the target object P as the object to be conveyed. In the example of the present embodiment, as the work content, it is determined that which target object P in which facility is to be conveyed to where by when. That is, the work determination unit 36 is information indicating the facility in which the target object P to be conveyed is kept, the target object P to be conveyed, a conveyance destination of the target object P, and a conveyance timing of the target object P. The work determination unit 36 transmits the determined work content to the information processing device 14 via the communication unit 30. The work determination unit 36 is not an essential configuration in the present embodiment.

### Information processing device

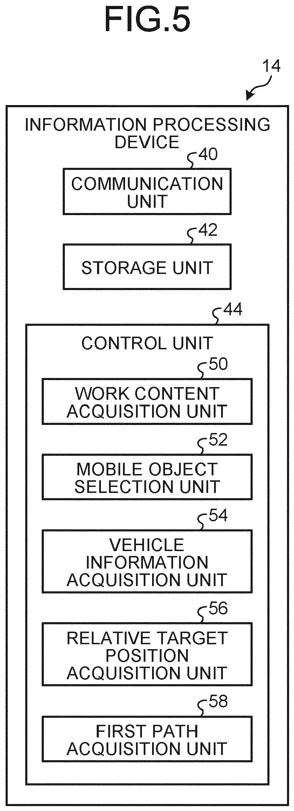

FIG. 5 is a schematic block diagram of the information processing device. The information processing device 14 is a device that is disposed in the facility W and at least performs an arithmetic operation of information related to movement of the mobile object 10 and the like, that is, what is called a ground system. The information processing device 14 is a computer, and includes a communication unit 40, a storage unit 42, and a control unit 44 as illustrated in FIG. 5. The communication unit 40 is a module that is used by the control unit 44 to communicate with an external device such as the management system 12 and the mobile object 10, and may include an antenna, for example. A communication scheme used by the communication unit 40 is wireless communication in the present embodiment, but the communication scheme may be optional. The storage unit 42 is a memory that stores various kinds of information such as a computer program or arithmetic content of the control unit 44, and includes at least one of a RAM, a main storage device such as a ROM, and an external storage device such as an HDD, for example. In the present embodiment, the management system 12 and the information processing device 14 are separate devices, but may be an integrated device. That is, the management system 12 may have at least part of the function of the information processing device 14, or the information processing device 14 may have at least part of the function of the management system 12.

The control unit 44 is an arithmetic device, and includes an arithmetic circuit such as a CPU, for example. The control unit 44 includes a work content acquisition unit 50, a mobile object selection unit 52, a vehicle information acquisition unit 54, a relative target position acquisition unit 56, and a first path acquisition unit 58. The control unit 44 implements the work content acquisition unit 50, the mobile object selection unit 52, the vehicle information acquisition unit 54, the relative target position acquisition unit 56, and the first path acquisition unit 58 by reading out, from the storage unit 42, and executing a computer program (software), and performs processing thereof. The control unit 44 may perform the processing with one CPU, or may include a plurality of CPUs and perform the processing with the CPUs. At least part of the work content acquisition unit 50, the mobile object selection unit 52, the vehicle information acquisition unit 54, the relative target position acquisition unit 56, and the first path acquisition unit 58 may be implemented with a hardware circuit. A computer program for the control unit 44 stored in the storage unit 42 may be stored in a (non-transitory) computer-readable storage medium that can be read by the information processing device 14.

### Work content acquisition unit and mobile object selection unit

The work content acquisition unit 50 acquires information on the work content determined by the management system 12, that is, information on the target object P to be conveyed. The work content acquisition unit 50 specifies the parking region ARC of the transport vehicle V on which the target object P is mounted based on the information on the target object P in the work content. For example, the storage unit 42 stores the target object P, the transport vehicle V on which the target object P is mounted, and the parking region ARC of the transport vehicle V in association with each other, and the work content acquisition unit 50 specifies the parking region ARC by reading out the information from the storage unit 42. The mobile object selection unit 52 selects the mobile object 10 to be operated. For example, the mobile object selection unit 52 selects the mobile object 10 to be operated from among a plurality of the mobile objects belonging to the facility W. The mobile object selection unit 52 may select the mobile object 10 to be operated, using an optional method. For example, based on the parking region ARC specified by the work content acquisition unit 50, the mobile object selection unit 52 may select the mobile object 10 suitable for conveyance of the target object P in the parking region ARC as the mobile object 10 to be operated. The work content acquisition unit 50 and the mobile object selection unit 52 are not essential configurations in the present embodiment.

### Vehicle information acquisition unit

The vehicle information acquisition unit 54 acquires positional information on the transport vehicle V. As the positional information on the transport vehicle V, the vehicle information acquisition unit 54 acquires information on a position of a rear end portion Vb of the transport vehicle V parked in the parking region ARC, information on an attitude of the transport vehicle V parked in the parking region ARC, and information on a length of the transport vehicle V. The position of the rear end portion Vb of the transport vehicle V parked in the parking region ARC is a position (coordinates) of the rear end portion Vb in a coordinate system on a two-dimensional surface on the region AR (coordinate system of the region AR). The attitude of the transport vehicle V parked in the parking region ARC is orientation of the transport vehicle V in the coordinate system of the region AR, and is assumed to be a yaw angle (rotation angle) of the mobile object 10 assuming that the X-direction is 0° when viewed from the direction Z orthogonal to the direction X and the direction Y. The position in the present embodiment may indicate coordinates in the coordinate system of the facility W unless otherwise specified. Similarly, the attitude in the present embodiment may indicate a yaw angle assuming that the X-direction is 0° when viewed from the direction Z unless otherwise specified. The length of the transport vehicle V indicates the length in the front and rear direction of the transport vehicle V. In the present embodiment, the length of the transport vehicle V indicates a distance in the front and rear direction (distance VL in FIG. 1) from a front end portion Va of the storage chamber VA in the front and rear direction to the rear end portion Vb of the storage chamber VA in the front and rear direction. However, the length of the transport vehicle V is not limited to the distance VL, but may be information indicating a length between optional positions in the front and rear direction of the transport vehicle V. For example, the length of the transport vehicle V may be a distance between a front end to a rear end of the vehicle V including a driver's seat.

The vehicle information acquisition unit 54 may acquire the position of the rear end portion Vb of the transport vehicle V parked in the parking region ARC and the attitude of the transport vehicle V parked in the parking region ARC using an optional method. In the present embodiment, as illustrated in FIG. 1, the vehicle information acquisition unit 54 may cause a sensor S1 included in the movement control system 1 to detect the transport vehicle V parked in the parking region ARC, and may calculate the position of the rear end portion Vb of the transport vehicle V and the attitude of the transport vehicle V based on a detection result obtained by the sensor S1. The sensor S1 is disposed in the facility W, and disposed on the opposite side of the Y-direction with respect to the parking region ARC (on a rear side of the transport vehicle V) in the present embodiment. However, a disposition position of the sensor S1 may be optional. The sensor S1 may be an optional sensor that can detect the position of the rear end portion Vb of the transport vehicle V. For example, the sensor S1 is a sensor that emits laser light in the present embodiment. The sensor S1 emits laser light while performing scanning in one direction (herein, a lateral direction), and detects the position and orientation of the object from reflected light of the emitted laser light. That is, the sensor S1 can be assumed to be what is called a 2D-LiDAR. However, the sensor 26 is not limited thereto, and may be a sensor that detects the object using an optional method. For example, the sensor 26 may be what is called a 3D-LiDAR that scans in a plurality of directions, or may be a camera (for example, a Time Of Flight (TOF) camera).

For example, in a case in which the sensor S1 is configured to emit laser light, the vehicle information acquisition unit 54 causes the sensor S1 to perform scanning in the lateral direction (horizontal direction) while causing the sensor S1 to emit laser light toward the parking region ARC side. The laser light from the sensor S1 is incident on the rear end portion Vb of the transport vehicle V parked in the parking region ARC, and the laser light from the sensor 26 is reflected by the rear end portion Vb. The sensor 26 receives reflected light from the rear end portion Vb. The vehicle information acquisition unit 54 acquires a point group as a set of measuring points based on a detection result of the reflected light received by the sensor 26. The measuring point is a point indicating a position (coordinates) at which the laser light is reflected, and the point group indicates a set of points indicating positions at which the laser light is reflected. In the present embodiment, based on the detection result of the reflected light, the vehicle information acquisition unit 54 calculates, as the measuring point, a position (coordinates) of a point at which the reflected light is reflected. The vehicle information acquisition unit 54 extracts a straight line by using, for example, a RANSAC algorithm based on the measuring points (point group), and calculates a position of the straight line as the rear end portion Vb of the transport vehicle V. The vehicle information acquisition unit 54 then assumes the attitude of the straight line as the attitude of the rear end portion Vb, and calculates the attitude of the transport vehicle V based on the attitude of the rear end portion Vb. For example, the vehicle information acquisition unit 54 may calculate a direction orthogonal to the attitude of the rear end portion Vb as the attitude of the transport vehicle V. However, a calculation method for the position of the rear end portion Vb of the transport vehicle V and the attitude of the transport vehicle V based on the detection result of the sensor S1 is not limited to the above description, and may be optional. For example, in a case of using a camera as the sensor S1, the position of the rear end portion Vb of the transport vehicle V and the attitude of the transport vehicle V may be calculated by causing the camera to image the rear end portion Vb and performing image analysis based on image data in which the rear end portion Vb is reflected. For example, a sensor for detecting the position of the rear end portion Vb of the transport vehicle V and a sensor for detecting the attitude of the transport vehicle V may be respectively disposed, and the position of the rear end portion Vb of the transport vehicle V and the attitude of the transport vehicle V may be calculated based on detection results obtained by the respective sensors.

The vehicle information acquisition unit 54 may acquire the length in the front and rear direction of the transport vehicle V using an optional method. In the present embodiment, the vehicle information acquisition unit 54 acquires vehicle type information indicating a vehicle type of the transport vehicle V, and acquires information on the length of the transport vehicle V based on the vehicle type information. Specifically, in the present embodiment, as illustrated in FIG. 1, the vehicle information acquisition unit 54 causes a sensor S2 included in the movement control system 1 to detect a point indicating the vehicle type of the transport vehicle V, acquires the vehicle type information based on a detection result of the sensor S2, and acquires information on the length of the transport vehicle V. The sensor S2 is disposed in the facility W. In the present embodiment, the sensor S2 is disposed on the opposite side of the Y-direction with respect to the parking region ARC (on the rear side of the transport vehicle V), and detects a point indicating the vehicle type for the transport vehicle V parked in the parking region ARC. However, a disposition position of the sensor S2 is optional, and the sensor S2 may be caused to detect a point indicating the vehicle type for the transport vehicle V positioned at a place other than the parking region ARC.

In the present embodiment, the sensor S2 is a camera, and the point indicating the vehicle type of the transport vehicle V is a number plate disposed on the transport vehicle V. In the present embodiment, the vehicle information acquisition unit 54 causes the sensor S2 to image the number plate of the transport vehicle V, and performs image analysis on a taken image of the number plate to acquire the vehicle type information on the transport vehicle V. In this case, for example, the vehicle information acquisition unit 54 acquires, as the vehicle type information on the transport vehicle V, an identifier specific to the vehicle (for example, a number, a symbol, a character, or a combination thereof) printed on the number plate of the transport vehicle V. The vehicle information acquisition unit 54 then reads out relation information indicating a relation between the vehicle type information and the length of the vehicle, and acquires information on the length of the transport vehicle V based on the relation information and the acquired vehicle type information on the transport vehicle V. The relation information is a database indicating a correspondence relation between the vehicle type information and the length of the vehicle. The vehicle information acquisition unit 54 acquires, as the information on the length of the transport vehicle V, a length of the vehicle associated with the acquired vehicle type information on the transport vehicle V in the relation information. The relation information is set in advance. The vehicle information acquisition unit 54 may read out the relation information from the storage unit 42, or may read out the relation information via the communication unit 40. In this way, in the present embodiment, the vehicle type information is acquired by imaging the number plate with the camera as the sensor S2, but the method of acquiring the vehicle type information is not limited thereto. For example, the point indicating the vehicle type is not limited to the number plate, but may be an optional portion of the transport vehicle V indicating the vehicle type, for example, a portion in which a model name of the vehicle type is marked. For example, the sensor S2 is not limited to the camera, but may be an optional sensor that can detect a point indicating the vehicle type.

### Relative target position acquisition unit

The relative target position acquisition unit 56 acquires relative target position information. The relative target position information is information indicating a relative position (relative target position) of a target position in the transport vehicle V with respect to the transport vehicle V. That is, in the present embodiment, it can be said that the relative target position information is not information indicating coordinates of the target position in the coordinate system of the region AR, but indicates a position at which the target position is present in the transport vehicle V, that is, coordinates of the target position in the coordinate system of the transport vehicle V. More specifically, it can be said that the relative target position information is not obtained by directly detecting the target position in the transport vehicle by the sensor, but is information indicating an approximate position of the target position in the transport vehicle V. In the description of the present embodiment, exemplified is a case in which the mobile object 10 picks up the target object P disposed in the transport vehicle V, so that it can be said that the relative target position is an approximate relative position in the transport vehicle V of the target object P to be picked up that is disposed in the transport vehicle V.

The relative target position acquisition unit 56 may acquire the relative target position information using an optional method other than a method of directly detecting the relative target position with the sensor. For example, the relative target position acquisition unit 56 acquires the relative target position information based on number information, which is set in advance, indicating the number of the target objects P disposed in the transport vehicle V. The number of the target objects P disposed in the transport vehicle V indicates the number of the target objects P disposed in the transport vehicle V, and may be a total number of the target objects P to be picked up and the target objects P not to be picked up. In this case, the relative target position acquisition unit 56 acquires the number information set in advance, and calculates the relative target position in the transport vehicle V based on the number information. That is, respective positions at which the target objects P are disposed and disposition order thereof are determined in advance in the transport vehicle V, so that the relative target position acquisition unit 56 can calculate the position (relative target position) of the target object P to be picked up based on the number information, and the positions at which the respective target objects P are disposed and the disposition order thereof. The relative target position acquisition unit 56 may acquire the number information using an optional method. For example, the number information may be manually set by a driver of the transport vehicle V or a staff of the facility W. In this case, the number information is input to a terminal carried by the driver of the transport vehicle V or the staff of the facility W, and the relative target position acquisition unit 56 acquires the number information from the terminal via the communication unit 40. Alternatively, for example, the number information may be automatically set at the time when the target object P is mounted on the transport vehicle V, and the relative target position acquisition unit 56 may acquire the number information that is automatically set.

The relative target position acquisition unit 56 may acquire the relative target position information set in advance. In this case, for example, among the respective positions at which the target objects P are disposed, the position at which the target object P to be picked up is disposed is set as the relative target position information in advance. The relative target position acquisition unit 56 acquires, as the relative target position information, the information on the position at which the target object P to be picked up is disposed that is set in advance. In this case, for example, an identifier (for example, a number and the like) is given to each of the positions at which the target objects P are disposed, and the relative target position acquisition unit 56 acquires information on the identifier given to the position at which the target object P to be picked up is disposed. The relative target position acquisition unit 56 then acquires the position corresponding to the acquired identifier as the relative target position in the transport vehicle V, that is, as the relative target position information. The identifier may be set by using an optional method. For example, the identifier may be manually set by the driver of the transport vehicle V or the staff of the facility W. In this case, for example, the identifier is input to the terminal carried by the driver of the transport vehicle V or the staff of the facility W, and the relative target position acquisition unit 56 acquires the identifier from the terminal via the communication unit 40. Alternatively, for example, the identifier may be automatically set at the time when the target object P is mounted on the transport vehicle V, and the relative target position acquisition unit 56 may acquire the identifier that is automatically set.

### First path acquisition unit

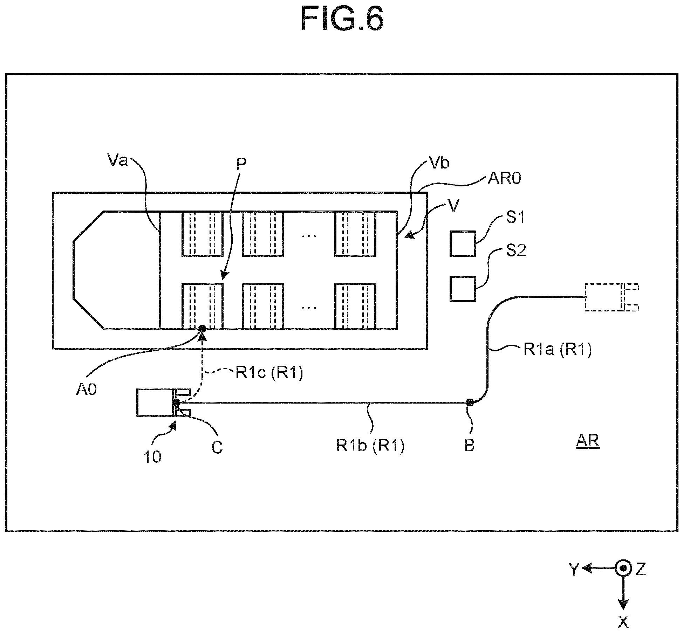

FIG. 6 is a schematic diagram for explaining a first path. The first path acquisition unit 58 sets a first path R1 toward the transport vehicle V based on the positional information on the transport vehicle V acquired by the vehicle information acquisition unit 54. That is, the first path acquisition unit 58 specifies the position of the transport vehicle V as the target position based on the positional information on the transport vehicle V, and sets the first path R1 toward the specified transport vehicle V. The first path R1 is set based on the coordinate system on a two-dimensional surface on the region AR (coordinate system of the region AR), so that the first path R1 is a track in the coordinate system of the region AR. However, the first path R1 is not limited thereto, but may be a track in a global coordinate system.

In the present embodiment, the first path acquisition unit 58 preferably sets the first path R1 toward the target position based on the positional information on the transport vehicle V acquired by the vehicle information acquisition unit 54 and the relative target position information acquired by the relative target position acquisition unit 56. Specifically, the first path acquisition unit 58 calculates the position and the attitude of the target position (herein, the target object P) in the coordinate system of the region AR based on the position of the rear end portion Vb of the transport vehicle V parked in the parking region ARC, the attitude of the transport vehicle V parked in the parking region ARC, the length in the front and rear direction of the transport vehicle V, and the relative target position indicating the relative position of the target position (herein, the target object P) in the transport vehicle V. That is, it can be said that the first path acquisition unit 58 converts the position and the attitude of the target position (relative target position) in the coordinate system of the transport vehicle V into the position and the attitude of the target position in the coordinate system of the region AR based on the position of the rear end portion Vb in the coordinate system of the region AR, the attitude of the transport vehicle V in the coordinate system of the region AR, and the length of the transport vehicle V. That is, for example, the first path acquisition unit 58 can calculate the position and the attitude of the front end portion Va in the coordinate system of the region AR based on the position of the rear end portion Vb, the attitude of the transport vehicle V, and the length of the transport vehicle V, and calculates the position and the attitude of the target position in the coordinate system of the region AR based on the position and the attitude of the front end portion Va and the relative target position.

As illustrated in FIG. 6, the first path acquisition unit 58 sets, as the first path R1, a track to a position (target arrival position A0) at which a predetermined position and attitude of the mobile object 10 are achieved with respect to the calculated position and attitude of the target position. The first path acquisition unit 58 transmits information on the set first path R1 to the mobile object 10 to be operated via the communication unit 40.

In the present embodiment, the first path acquisition unit 58 sets the first path R1 to include a track R1a, a track R1b, and a track R1c. The track R1a is a track to a predetermined position B. The track R1b is a track that is connected to the track R1a, and runs in the Y-direction from the predetermined position B to a predetermined position C on a lateral side (herein, the X-direction side) of the target position. The track R1c is a track that is connected to the track R1b, and runs toward the opposite side of the X-direction from the predetermined position C to the target arrival position A0. It can be said that the track R1c is a track for turning the mobile object 10 so that a traveling direction of the mobile object 10 is switched from a direction toward the Y-direction to a direction toward a direction opposite to the X-direction. The predetermined position B may be optionally set. For example, the predetermined position B may be a position within a predetermined distance range with respect to the parking region AR0. The predetermined position C may also be optionally set. For example, the predetermined position C may be a position within a predetermined distance range with respect to the target position.

The track R1a may be a track along a global path set in advance. The global path is a track toward the parking region AR0, and set in advance based on map information on the facility W. The global path may be set also based on information about vehicle specifications of the mobile object 10 in addition to the map information on the facility W. The information about the vehicle specifications is, for example, specifications that influence a route along which the mobile object 10 can move, such as a size or a minimum turning radius of the mobile object 10. In a case in which the global path is set also based on the information about the vehicle specifications, the global path may be set for each mobile object. The global path may also be set by a person based on the map information, the information about the vehicle specifications, and the like, or may be automatically set by a device such as the information processing device 14 based on the map information, the information about the vehicle specifications, and the like. In a case of automatically setting the global path, for example, a point desired to be passed through (Waypoint) may be designated, for example. In this case, the shortest global path can be set to pass through the point desired to be passed through while avoiding an obstacle (a fixed object such as a wall).

The track R1b and the track R1c are set based on the positional information on the transport vehicle V and the relative target position information. That is, for example, the track R1b may be a track that runs straight in a direction along the attitude of the transport vehicle V in the parking region ARC, and the track R1c may be a track that runs from the predetermined position C on the X-direction side of the parking region ARC toward the opposite side of the X-direction to reach the target arrival position A0.

In this way, the first path acquisition unit 58 uses the track R1a set in advance as the global path to the predetermined position B, and sets the tracks R1b and R1c from the predetermined position B to the target arrival position A0 based on the positional information on the transport vehicle V and the relative target position information. However, the first path R1 is not limited to the track including the track R1a, the track R1b, and the track R1c as described above, but may be an optional track to the target arrival position A0.

### Control device for mobile object

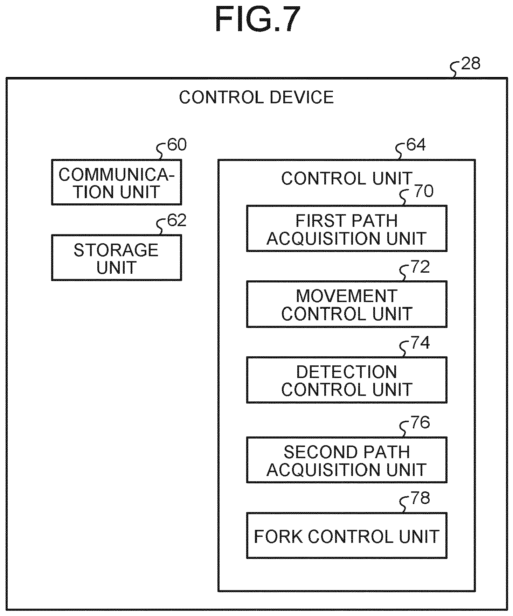

Next, the following describes the control device 28 for the mobile object 10. FIG. 7 is a schematic block diagram of the control device for the mobile object. The control device 28 controls the mobile object 10 to cause the mobile object 10 to approach the transport vehicle V in the parking region AR0. The control device 28 is a computer, and includes a communication unit 60, a storage unit 62, and a control unit 64 as illustrated in FIG. 7. The communication unit 60 is a module that is used by the control unit 64 to communicate with an external device such as the information processing device 14, and may include an antenna and the like, for example. A communication scheme used by the communication unit 60 is wireless communication in the present embodiment, but the communication scheme may be optional. The storage unit 62 is a memory that stores various kinds of information such as a computer program or arithmetic content of the control unit 64, and includes at least one of a RAM, a main storage device such as a ROM, and an external storage device such as an HDD, for example.

The control unit 64 is an arithmetic device, and includes an arithmetic circuit such as a CPU, for example. The control unit 64 includes a first path acquisition unit 70, a movement control unit 72, a detection control unit 74, a second path acquisition unit 76, and a fork control unit 78. The control unit 64 implements the first path acquisition unit 70, the movement control unit 72, the detection control unit 74, the second path acquisition unit 76, and the fork control unit 78 by reading out, from the storage unit 62, and executing a computer program (software), and performs processing thereof. The control unit 64 may perform the processing with one CPU, or may include a plurality of CPUs and perform the processing with the CPUs. At least part of the first path acquisition unit 70, the movement control unit 72, the detection control unit 74, the second path acquisition unit 76, and the fork control unit 78 may be implemented with a hardware circuit. A computer program for the control unit 64 stored in the storage unit 62 may be stored in a (non-transitory) computer-readable storage medium that can be read by the control device 28.

### First path acquisition unit

The first path acquisition unit 70 acquires information on the first path R1. When the mobile object 10 is selected to be operated, the first path acquisition unit 70 may acquire the information on the first path R1 from the information processing device 14, or may read out the information on the first path R1 previously stored in the storage unit 62. The first path acquisition unit 70 does not necessarily acquire the first path R1 from the information processing device 14, but may set the first path R1 by itself. In this case, the first path acquisition unit 70 may acquire the positional information on the transport vehicle V and the relative target position information from the information processing device 14, and may set the first path R1 based on the positional information on the transport vehicle V and the relative target position information. Alternatively, for example, the control device 28 may include the vehicle information acquisition unit 54 and the relative target position acquisition unit 56, the control device 28 may acquire the positional information on the transport vehicle V and the relative target position information, and the first path acquisition unit 70 may set the first path R1 based thereon.

### Movement control unit

The movement control unit 72 controls movement of the mobile object 10 by controlling a moving mechanism such as a driving unit or a steering system of the mobile object 10. The movement control unit 72 causes the mobile object 10 to move along the first path R1 and a second path R2 (described later). By successively grasping the positional information on the mobile object 10, the movement control unit 72 causes the mobile object 10 to move to pass through the first path R1 and the second path R2. A method of acquiring the positional information on the mobile object 10 is optional. For example, in the present embodiment, a detection body (not illustrated) is disposed in the facility W, and the movement control unit 72 acquires information about the position and the attitude of the mobile object 10 based on detection of the detection body. Specifically, the mobile object 10 emits laser light toward the detection body, and receives reflected light of the laser light reflected from the detection body to detect the position and the attitude of the mobile object 10 in the facility W. Herein, the position of the mobile object 10 means two-dimensional coordinates in the direction X and the direction Y in the region AR of the facility W. Also in the following description, the position means two-dimensional coordinates in the region AR unless otherwise specified. The attitude of the mobile object 10 is a yaw angle (rotation angle) of the mobile object 10 assuming that the X-direction is 0° when viewed from the direction Z orthogonal to the direction X and the direction Y. The method of acquiring the information about the position and the attitude of the mobile object 10 is not limited to using the detection body. For example, Simultaneous Localization and Mapping (SLAM) may be used.

### Detection control unit

The detection control unit 74 causes the sensor 26 to detect the position and the attitude of the target object P, and acquires a detection result of the position and the attitude of the target object P obtained by the sensor 26. Specific processing performed by the detection control unit 74 will be described later.

### Second path acquisition unit

The second path acquisition unit 76 acquires information on the second path R2 that is set based on the position and the attitude of the target object P. Specific processing performed by the second path acquisition unit 76 will be described later.

### Fork control unit

The fork control unit 78 controls an operation of the fork 24 of the mobile object 10.

### Processing performed by control device

Next, the following describes processing performed by the control device 28 at the time when the mobile object 10 approaches the transport vehicle V.

### Movement along first path

As illustrated in FIG. 6, the movement control unit 72 of the control device 28 causes the mobile object 10 to move along the first path R1 acquired by the first path acquisition unit 70. The movement control unit 72 causes the mobile object 10 to move from a current position of the mobile object 10 to pass through the first path R1. The first path R1 is set in advance before the mobile object 10 starts to move toward the transport vehicle V. For example, it can be said that the first path R1 is not set based on the position and the attitude of the transport vehicle V that are detected by the sensor while the mobile object 10 is moving toward the transport vehicle V.

Herein, the first path R1 is set based on the relative target position indicating an approximate target position, but the target position (herein, the target object P) in the transport vehicle V may be shifted from the relative target position described above. Thus, in the present embodiment, an actual target position is detected, and the path is switched based thereon.

### Detection of target object on first path

The detection control unit 74 acquires a detection result of the position and the attitude of the target position (herein, the target object P) in the transport vehicle V. A method of acquiring the detection result of the position and the attitude of the target position (herein, the target object P) in the transport vehicle V is optional. In the present embodiment, the detection control unit 76 causes the sensor 26 to detect the position and the attitude of the target position (herein, the target object P) while the mobile object 10 is moving along the first path R1. The detection control unit 74 causes the sensor 26 to detect the target object P herein in the transport vehicle V in the parking region ARC by causing the sensor 26 to perform detection for the parking region ARC the position of which is known.

For example, in a case in which the sensor 26 is configured to emit laser light, the detection control unit 74 causes the sensor 26 to perform scanning in the lateral direction (horizontal direction) while causing the sensor 26 to emit laser light toward the parking region ARC side during a period in which the mobile object 10 is moving along the first path R1. The target object P reflects the laser light from the sensor 26. The sensor 26 receives reflected light from the target object P. The detection control unit 74 acquires a point group as a set of measuring points based on a detection result of the reflected light received by the sensor 26. In the present embodiment, based on the detection result of the reflected light, the detection control unit 74 calculates, as the measuring point, a position (coordinates) of a point at which the reflected light is reflected. The detection control unit 74 extracts a straight line by using, for example, a RANSAC algorithm based on the measuring points (point group), and calculates a position and an attitude of the straight line as the position and the attitude of the target object P. However, a calculation method for the position and the attitude of the target object P based on the detection result of the sensor 26 may be optional.

In the present embodiment, the target object P is detected while the mobile object 10 is moving along the track R1c, but the detection control unit 74 may cause the transport vehicle V to be detected at an optional timing when the mobile object 10 is positioned on the first path R1. For example, the detection control unit 74 may cause the transport vehicle V to be detected while the mobile object 10 is moving along the track R1b, or may cause the transport vehicle V to be detected at the time when the mobile object 10 is stopping at an optional position on the first path R1.

Hereinafter, information indicating the position and the attitude of the target object P detected by the sensor 26 is appropriately referred to as position and attitude information on the target object P. It can be said that the detection control unit 74 acquires the position and attitude information on the target object P detected by the sensor 26. The position and the attitude of the target object P are not necessarily detected by the sensor 26, or not necessarily acquired at the time when the mobile object 10 is positioned on the first path R1. For example, a sensor for detecting the position and the attitude of the target object P may be disposed in the facility W, and the detection control unit 74 may acquire a detection result of the position and the attitude of the target object P from the sensor. That is, the position and attitude information on the target object P acquired by the detection control unit 74 is not limited to the information detected by the sensor 26, but may be information detected by a sensor disposed in the facility W, for example.

### Setting of second path

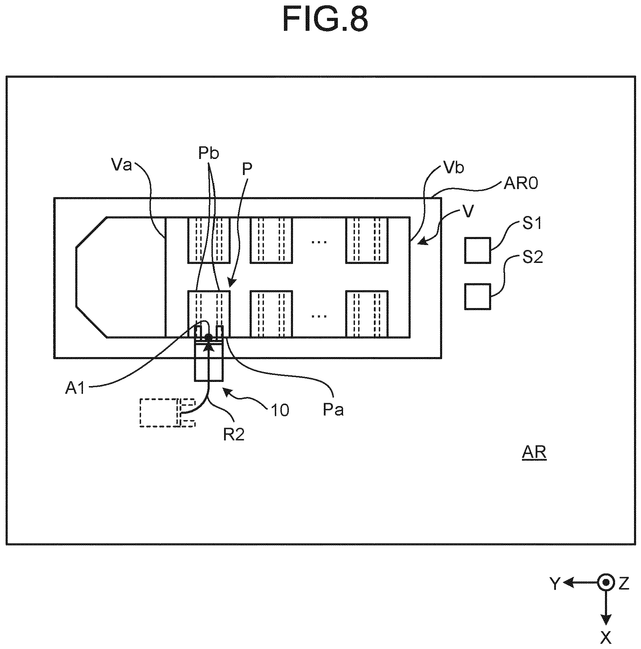

FIG. 8 is a schematic diagram for explaining the second path. The second path acquisition unit 76 acquires the information on the second path R2 that is set based on the position and attitude information on the target object P that is acquired during movement along the first path R1. The second path R2 is generated assuming that the position and the attitude of the target object P are detected by the sensor 26. It can be said that the second path R2 is a track to a position (target arrival position A1) at which a predetermined position and attitude of the mobile object 10 are achieved with respect to the target position (herein, the target object P) the position and the attitude of which are detected by the sensor 26. In the present embodiment, it can be said that the target arrival position A1 is a position and an attitude at and with which the mobile object 10 can pick up the target object P in a case in which the position and the attitude of the target object P are detected by the sensor 26.

In the present embodiment, the second path acquisition unit 76, that is, the mobile object 10 itself sets the second path R2 based on the position and attitude information on the target object P. However, the embodiment is not limited thereto. A unit other than the mobile object 10 (for example, the information processing device 14) may set the second path R2, and the second path acquisition unit 76 may acquire the information on the second path R2 set by the unit via the communication unit 60.

### Movement along second path

After the second path acquisition unit 76 acquires the second path R2, the movement control unit 72 switches the first path R1 to the second path R2, and causes the mobile object 10 to move along the second path R2.

After arriving at the target arrival position A1 by moving along the second path R2, the mobile object 10 causes the fork control unit 78 to move the fork 24, and causes the fork 24 to be inserted into the opening Pb to pick up the target object P. The movement control unit 72 causes the mobile object 10 that has picked up the target object P to be conveyed to the set conveyance destination. Herein, the mobile object 10 may successively detect the position of the opening Pb of the target object P while moving along the second path R2, and may move the fork 24 to align the position of the opening Pb with the position of the fork 24 by feedback control. In this case, for example, the fork control unit 78 may move (side-shift) the fork 24 in the lateral direction to align the position of the opening Pb with the position of the fork 24.

However, the second path R2 is not necessarily set based on the position and attitude information on the target object P. For example, the movement control unit 72 may cause the mobile object 10 to move to the target object P along the first path R1 without setting the second path R2 .

The first path R1 may be updated by detecting the position and the attitude of the transport vehicle V by the sensor 26 to set the first path R1 with higher accuracy. In this case, for example, the detection control unit 74 causes the sensor 26 to detect the transport vehicle V while the mobile object 10 is moving along the first path R1 (for example, the track R1b), and acquires the position and the attitude of the transport vehicle V based on a detection result of the transport vehicle V obtained by the sensor 26. A method of acquiring the position and the attitude of the transport vehicle V based on the detection result of the sensor 26 may be the same as the method of acquiring the position and the attitude of the target object P. The first path acquisition unit 70 then recalculates the target arrival position A0 based on the acquired position and attitude of the transport vehicle V and the relative target position, sets a track to the recalculated target arrival position A0, updates the first path R1 to the set track, and continues movement along the updated first path R1.

In the present embodiment, the mobile object 10 moves toward the opposite side of the fork 24 as the front until passing through the track R1b, turns back on the track R1c or the second path R2 so that the fork 24 side becomes the front, and moves toward the target object P in a direction opposite to the X-direction. However, the track R1c and the second path R2 are not limited to the track for turning back, but may be a track for causing the mobile object 10 to turn toward the target object P in a direction opposite to the X-direction without turning back. In this case, for example, the mobile object 10 moves while causing the fork 24 to face the front even until passing through the track R1b, and switches the track to the track R1c or the second path R2 while keeping the fork 24 at the front.

### Processing flow

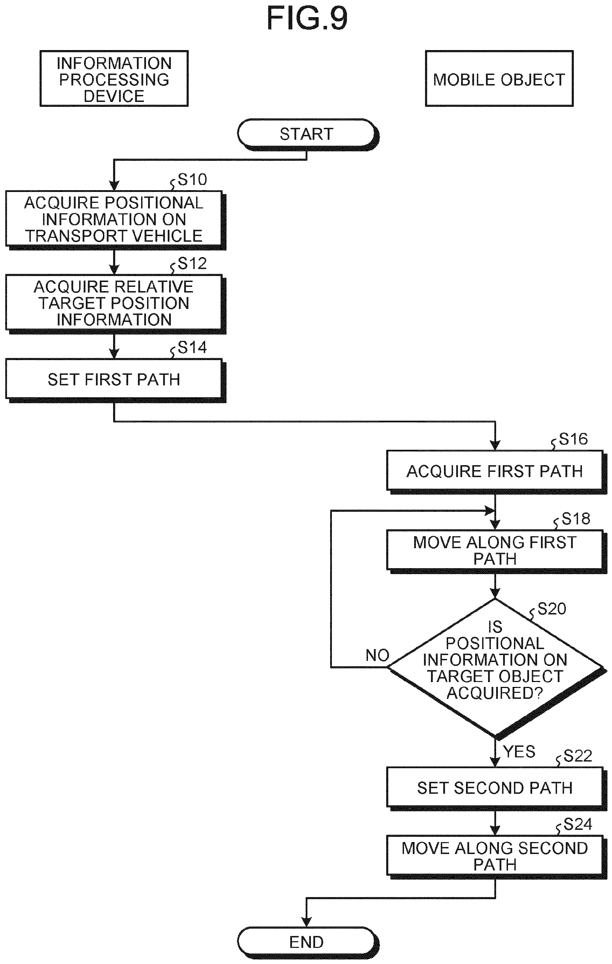

The following describes a processing flow for the movement control system 1 described above based on a flowchart. FIG. 9 is a flowchart for explaining the processing flow according to the present embodiment. As illustrated in FIG. 9, the information processing device 14 acquires the positional information on the transport vehicle V (herein, the position of the rear end portion Vb, the attitude of the transport vehicle V, and the length of the transport vehicle V) by the vehicle information acquisition unit 54 (Step S10), acquires the relative target position information (relative position of the target position with respect to the transport vehicle V) by the relative target position acquisition unit 56 (Step S12), and sets the first path R1 based on the positional information on the transport vehicle V and the relative target position information by the first path acquisition unit 58 (Step S14). The mobile object 10 acquires the first path R1 from the information processing device 14 by the first path acquisition unit 70 (Step S16), and moves along the first path R1 by the movement control unit 72 (Step S18). While moving along the first path R1, the mobile object 10 causes the detection control unit 74 to acquire the positional information on the target object P. If the positional information on the target object P is not acquired (No at Step S20), the process returns to Step S18, and the mobile object 10 continuously moves along the first path R1. On the other hand, if the positional information on the target object P is acquired (Yes at Step S20), the mobile object 10 sets the second path R2 based on the positional information on the target object P by the second path acquisition unit 76 (Step S22), and moves along the second path R2 by the movement control unit 72 (Step S24).

As described above, in the present embodiment, before the mobile object 10 starts to move toward the transport vehicle V, the first path R1 is set based on the position of the rear end portion Vb of the transport vehicle V, the attitude of the transport vehicle V, and the length of the transport vehicle V. That is, the first path R1 is a track that is set based on the position and the attitude of the transport vehicle V, so that, even in a case in which the transport vehicle V is parked while being shifted from a reference position in the parking region ARC (position at which the transport vehicle V is parked in the parking region ARC without a shift), the mobile object 10 can appropriately approach the transport vehicle V. The first path R1 is set by using the position of the rear end portion Vb, the attitude of the transport vehicle V, and the length of the transport vehicle V, so that the first path R1 can be set with high accuracy while appropriately reflecting the position and the attitude of the transport vehicle V. More specifically, by setting the first path R1 as described above, a change amount of the track can be reduced at the time of switching the track to the second path R2, for example. Accordingly, a large track change such as turning back can be suppressed, and throughput can be improved.

In the above description, exemplified is a case in which the mobile object 10 unloads the target object P mounted on the transport vehicle V, but the mobile object 10 may load the target object P onto the transport vehicle V. In this case, assuming that a position at which the target object P should be loaded is the target position, the mobile object 10 may approach the target arrival position AC along the first path R1 to the target arrival position A0, which is a point where a predetermined position and attitude are achieved with respect to the target position, without setting the second path R2 based on the positional information on the target object P in the transport vehicle V. The position at which the target object P should be loaded may be set using the same method as the method of setting the target position used for setting the first path R1 in a case of unloading the target object P, that is, based on the positional information on the transport vehicle V and the relative target position, for example. For example, the mobile object 10 may also set the second path R2 in a case of loading the target object P. In this case, for example, the mobile object 10 may cause the sensor 26 to detect the position at which the target object P should be loaded in the transport vehicle V, set the second path R2 to the target arrival position A1 assuming that the target arrival position A1 is the point at which the predetermined position and attitude are achieved with respect to the position at which the target object P should be loaded, and approach the target arrival position A1 along the second path R2. In this case, for example, the sensor 26 may be caused to detect a wall in the storage chamber VA and the position and the attitude of the other target object P, and detect a position distant from the wall and the other target object P by a reference distance in a predetermined direction as the position at which the target object P should be loaded.

### Other examples

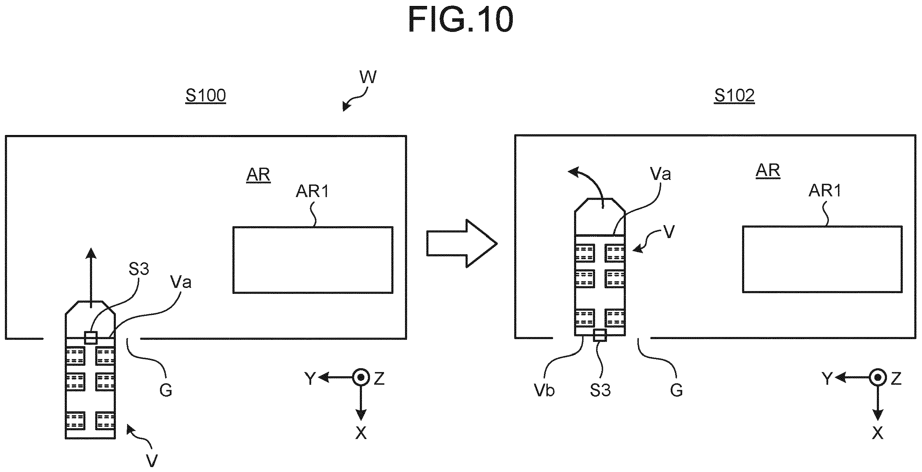

Next, the following describes other examples of the present embodiment. FIG. 10 is a schematic diagram illustrating another example of the method of acquiring the length of the transport vehicle. For example, as illustrated in FIG. 10, the vehicle information acquisition unit 54 may acquire the length in the front and rear direction of the transport vehicle V by detecting the front end portion Va and the rear end portion Vb of the transport vehicle V by a sensor S3. In this case, for example, the sensor S3 may be disposed on a ceiling of an entrance G. The entrance G is an entrance for the transport vehicle V to enter the facility W. The sensor S3 may be an optional sensor that can detect the front end portion Va and the rear end portion Vb of the transport vehicle V, for example, a sensor that emits laser light. In this case, the vehicle information acquisition unit 54 causes the sensor S3 to emit laser light toward the opposite side of the Z-direction. When the transport vehicle V passes through the entrance G, an upper surface of the transport vehicle V is irradiated with the laser light from the sensor S3, and the laser light is reflected from the upper surface. The sensor S3 receives the reflected light from the upper surface of the transport vehicle V. The vehicle information acquisition unit 54 calculates the length in the front and rear direction of the transport vehicle V based on a detection result of the reflected light received by the sensor S3. For example, the vehicle information acquisition unit 54 may calculate the length in the front and rear direction of the transport vehicle V by multiplying a speed of the transport vehicle V by a time from a timing when the sensor S3 receives the reflected light from the upper surface of the front end portion Va of the transport vehicle V (Step S100 in FIG. 10) to a timing when the sensor S3 receives the reflected light from the upper surface of the rear end portion Vb of the transport vehicle V (Step S102 in FIG. 10). The speed of the transport vehicle V may be measured by a speed sensor disposed in the facility W, for example. Alternatively, a speed limit set in advance for the facility W may be caused to be the speed of the transport vehicle V, or the speed of the transport vehicle V may be measured from a measured value of the sensor S3. In a case of measuring the speed by using the sensor S3, for example, a point group on the upper surface of the transport vehicle V is overlapped, and a position of a front end or a rear end of the point group is shifted, so that the speed of the vehicle can be calculated from a shift speed of the point group and a sensor scanning period.
Alternatively, for example, the transport vehicle V may be stopped in a detectable region of the sensor S3, the sensor S3 may be caused to emit laser light from the front end portion Va to the rear end portion Vb of the transport vehicle V while performing scanning, the point group as a set of measuring points may be acquired based on a detection result of the reflected light received by the sensor S3, and the length in the front and rear direction of the transport vehicle V may be calculated based on the point group.

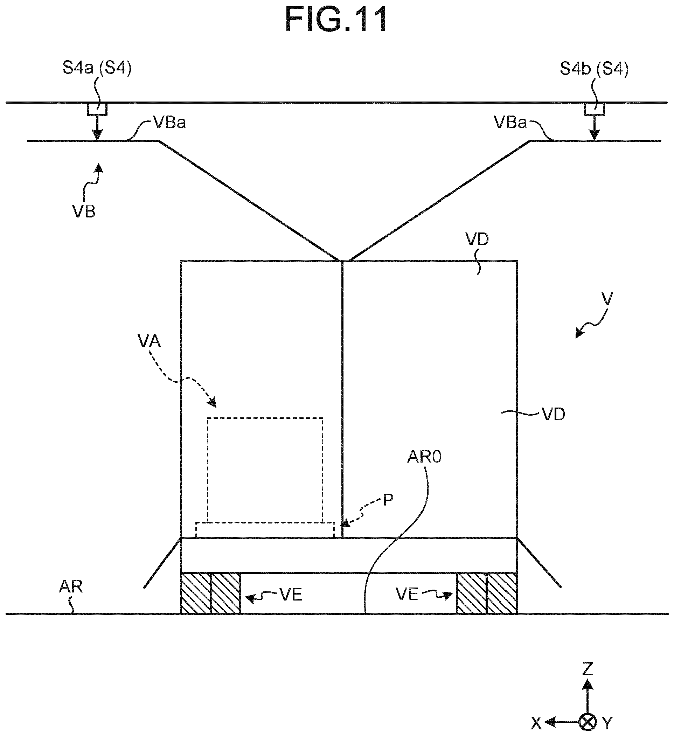

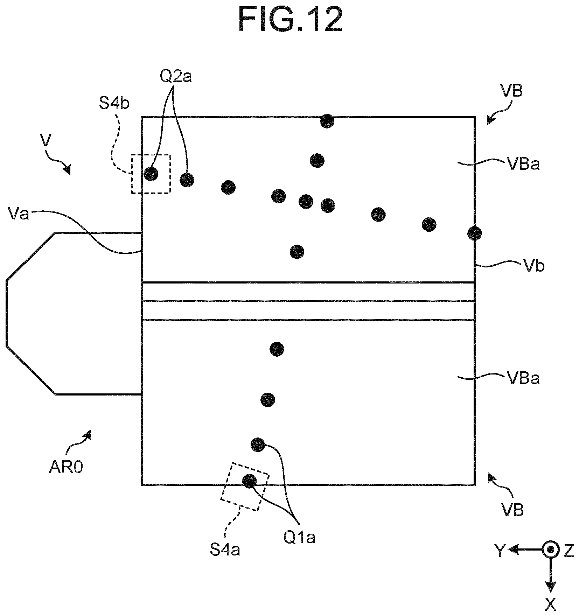

FIG. 11 and FIG. 12 are schematic diagrams illustrating other examples of the method of acquiring the positional information on the transport vehicle. As illustrated in FIG. 11, the transport vehicle V parked in the parking region ARC is in a state in which the lateral doors VB are opened so that a surface VBa on a vehicle exterior side of the lateral door VB faces the Z-direction side. The vehicle information acquisition unit 54 may acquire the positional information on the transport vehicle V by causing a sensor S4 to detect the lateral door VB of the transport vehicle V parked in the parking region ARC.

The sensor S4 is disposed on a ceiling of the parking region AR0. The sensor S4 may be an optional sensor that can detect the front end portion Va and the rear end portion Vb of the transport vehicle V, for example, a sensor that emits laser light. In this example, two sensors S4a and S4b are disposed as sensors S4. However, the number of the sensors S4 may be optional.

As illustrated in FIG. 12, the vehicle information acquisition unit 54 causes the sensors S4a and S4b to perform scanning along different loci while causing the sensors S4a and S4b to emit laser light toward the parking region ARC side (opposite side of the Z-direction). Pieces of laser light from the sensors S4a and S4b are emitted onto different positions on the surface VBa of the lateral door VB facing the Z-direction side. That is, it can be said that the sensors S4a and S4b emit laser light onto different positions on the surface VBa while performing scanning in one direction. The sensors S4a and S4b perform scanning with laser light in the horizontal direction. Scanning directions of the laser light by the sensors S4a and S4b preferably intersect with each other. The scanning directions of the laser light by the sensors S4a and S4b may be preferably set to pass through sides on a front side and a rear side of the surface VBa, and sides on both lateral sides of the surface VBa.

The sensor S4a receives reflected light from the surface VBa, which is the laser light emitted by the sensor S4a itself. It can be said that the sensor S4a acquires a point group Q1a of the reflected light from the surface VBa. The point group Q1a is aligned in the scanning direction of the sensor S4a. Similarly, the sensor S4b receives the reflected light from the surface VBa, which is the laser light emitted by the sensor S4b itself, and acquires a point group Q2a of the reflected light from the surface VBa. The point group Q2a is aligned in the scanning direction of the sensor S4b. The vehicle information acquisition unit 54 acquires information on these point groups Q1a and Q2a (information on coordinates of the point groups Q1a and Q2a). The vehicle information acquisition unit 54 reads out information on dimensions of the transport vehicle V from the storage unit 42, for example. The vehicle information acquisition unit 54 calculates the positional information on the transport vehicle based on the information on the point groups Q1a and Q2a and the information on the dimensions of the transport vehicle V. For example, the information on the dimensions of the transport vehicle V is information indicating a ratio between the length in the front and rear direction and the length in the lateral direction of the transport vehicle V, and the position of the rear end portion Vb of the transport vehicle V, the attitude of the transport vehicle V, and the length in the front and rear direction of the transport vehicle V can be calculated based on the ratio between the length in the front and rear direction and the length in the lateral direction of the transport vehicle V and a ratio between the entire length of the arranged point group Q1a and the entire length of the arranged point group Q2a. As described above, in this example, the target object information acquisition unit 54a calculates the position and the orientation of the vehicle V based on the information on the point groups Q1a and Q2a and the information on the dimensions of the vehicle V. The information on the dimensions of the vehicle V can be acquired by using the same method as the method of acquiring the vehicle type information in the embodiment described above, for example.

The surface VBa of the lateral door VB faces the lateral side when the transport vehicle V moves, so that foreign substances such as snow, water, or dust hardly adhere thereto. Thus, lowering of detection accuracy can be suppressed by detecting the surface VBa. A flap for reducing air resistance is disposed between the storage chamber VA and the driver's seat, and it can be considered that detection accuracy at a position of the front end portion Va may be lowered due to the flap. However, the surface VBa is distant from the flap, so that lowering of detection accuracy due to the flap can also be suppressed.

The methods in the embodiment and the other examples described above may be combined with each other to acquire the positional information on the transport vehicle. That is, for example, the position of the rear end portion Vb of the transport vehicle V, the attitude of the transport vehicle V, and the length of the transport vehicle V may be respectively acquired by using different methods, or at least one of them may be acquired by using a method different from the other method.

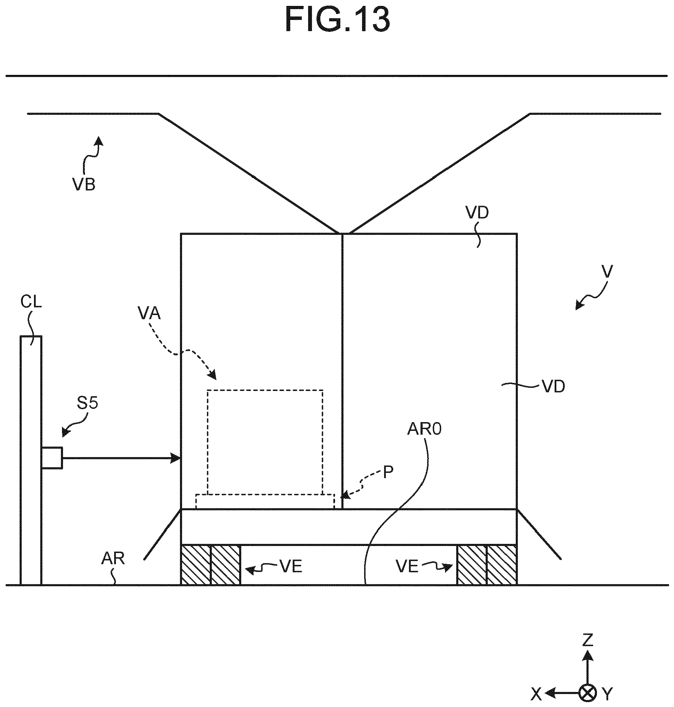

FIG. 13 is a schematic diagram illustrating another example of the method of acquiring the position and attitude information on the target object. As illustrated in FIG. 13, the position and attitude information on the target object P acquired for setting the second path R2 is not necessarily acquired by being detected by the sensor 26 of the mobile object 10, but may be acquired by being detected by a sensor S5 disposed in the facility W. The sensor S5 may be disposed on the X-direction side of the parking region AR0, for example. A method of detecting the target object P by the sensor S5 is optional. For example, laser light may be emitted onto the target object P. In this case, the information processing device 14 causes the sensor S5 to perform scanning in the lateral direction (horizontal direction) while causing the sensor S5 to emit laser light toward the parking region AR0 side. The target object P reflects the laser light from the sensor S5. The sensor S5 receives reflected light from the target object P. The information processing device 14 acquires a point group as a set of measuring points based on a detection result of the reflected light received by the sensor S5. In the present embodiment, based on the detection result of the reflected light, the information processing device 14 calculates, as the measuring point, a position (coordinates) of a point at which the reflected light is reflected. The information processing device 14 extracts a straight line by using, for example, a RANSAC algorithm based on the measuring points (point group), and calculates a position and an attitude of the straight line as the position and attitude information on the target object P. In this case, the information processing device 14 may set the second path R2 based on the position and attitude information on the target object P, and transmit information on the second path R2 to the mobile object 10. However, a calculation method for the position and attitude information on the target object P based on the detection result of the sensor S5 may be optional.

Alternatively, a moving mechanism for changing a position of the sensor S5 in the Z-direction may be disposed. In this case, for example, the sensor S5 is attached to a pole CL extending in the Z-direction in a manner movable in the Z-direction, and the moving mechanism changes the position of the sensor S5 in the Z-direction so that the sensor S5 can emit laser light onto the target object P in accordance with a height of the load-carrying platform of the vehicle V.

In the description about FIG. 13, exemplified is a case of setting the second path R2 by causing the sensor S5 to detect the target object P, but the first path R1 may be set by causing the sensor S5 to detect the transport vehicle V to acquire the positional information on the transport vehicle V. In this case, for example, the vehicle information acquisition unit 54 causes the sensor S5 to perform scanning in the lateral direction (horizontal direction) while causing the sensor S5 to emit laser light toward the parking region AR0 side. The transport vehicle V reflects the laser light from the sensor S5 on a surface on the X-direction side. The sensor S5 receives reflected light from the surface on the X-direction side of the transport vehicle V. The vehicle information acquisition unit 54 acquires a point group as a set of measuring points based on a detection result of the reflected light received by the sensor S5, extracts a straight line by using, for example, a RANSAC algorithm based on the point group, and calculates the positional information on the transport vehicle V based on a position and an attitude of the straight line.

### Effects

As described above, the control method for the mobile object 10 according to the present embodiment is the control method for the mobile object 10 that automatically moves, and the control method includes: a step of acquiring the positional information on the transport vehicle V parked in the parking region ARC including the information on the position of the rear end portion Vb of the transport vehicle V, the information on the attitude of the transport vehicle V, and the information on the length of the transport vehicle V; a step of setting the first path R1 toward the transport vehicle V based on the positional information on the transport vehicle V; and a step of causing the mobile object 10 to move along the first path R1. The first path R1 is a track that is set based on the position and the attitude of the transport vehicle V parked in the parking region ARC, so that, even in a case in which the transport vehicle V is parked with a shift in the parking region ARC, the mobile object 10 can appropriately approach the transport vehicle V. The first path R1 is set by using the position of the rear end portion Vb, the attitude of the transport vehicle V, and the length of the transport vehicle V, so that the first path R1 can be set with high accuracy while appropriately reflecting the position and the attitude of the transport vehicle V. More specifically, by setting the first path R1 as described above, a change amount of the track can be reduced at the time of switching the track to the second path R2, for example. Accordingly, a large track change such as turning back can be suppressed, and throughput can be improved.

This control method further includes a step of acquiring the relative target position information indicating the relative position of the target position with respect to the transport vehicle V using a method other than the method of directly detecting the target position in the transport vehicle V with the sensor. At the step of setting the first path R1, the first path R1 toward the target position is preferably set based on the positional information on the transport vehicle V and the relative target position information. According to this control method, the first path R1 is set by also using the relative target position in the transport vehicle V, so that the mobile object 10 can appropriately approach the target position in the transport vehicle V.

At the step of acquiring the relative target position information, the relative target position information is preferably acquired based on the information indicating the number of the target objects P disposed in the transport vehicle V. According to this control method, the relative target position information is set based on the number of the target objects P disposed in the transport vehicle V, so that the mobile object 10 can appropriately approach the target position in the transport vehicle V.

At the step of acquiring the relative target position information, the relative target position information set in advance is preferably acquired. According to this control method, the first path R1 is set by also using the relative target position, so that the mobile object 10 can appropriately approach the target position in the transport vehicle V.

At the step of acquiring the positional information on the transport vehicle, the position of the rear end portion Vb and the attitude of the transport vehicle V are preferably acquired by causing the sensor S1 disposed in the facility W in which the parking region ARC is disposed to detect the rear end portion Vb of the transport vehicle V. In this way, by acquiring the position of the rear end portion Vb and the attitude of the transport vehicle V, the first path R1 can be set with high accuracy while appropriately reflecting the position and the attitude of the transport vehicle V.

At the step of acquiring the positional information on the transport vehicle, it is preferable to acquire the vehicle type information indicating the vehicle type of the transport vehicle V, and acquire the information on the length of the transport vehicle V based on the vehicle type information. By acquiring the information on the length of the transport vehicle V using the vehicle type information, the first path R1 can be appropriately set.

At the step of acquiring the positional information on the transport vehicle, it is preferable to acquire the vehicle type information by causing the sensor S2 disposed in the facility W in which the parking region ARC is disposed to detect the point indicating the vehicle type of the transport vehicle V, and acquire the information on the length of the transport vehicle V based on the relation information indicating the relation between the vehicle type information and the length of the vehicle and the acquired vehicle type information. By acquiring the information on the length of the transport vehicle V using the vehicle type information, the first path R1 can be appropriately set.

At the step of acquiring the positional information on the transport vehicle, it is preferable to acquire the information on the length of the transport vehicle V by causing the sensor S3 disposed in the facility W in which the parking region ARC is disposed to detect the rear end portion Vb and the front end portion Va of the transport vehicle V. By acquiring the information on the length of the transport vehicle V using the sensor S3, the first path R1 can be appropriately set.

The transport vehicle V is in a state in which the lateral doors VB are opened so that the surface VBa of the lateral door VB faces upward in a vertical direction in the parking region ARC. At the step of acquiring the positional information on the transport vehicle V, the positional information on the transport vehicle V is acquired by causing the sensor S4 disposed on the ceiling of the parking region ARC to detect the lateral door VB. By acquiring the positional information on the transport vehicle V using the sensor S3, the first path R1 can be appropriately set.

The mobile object 10 according to the present disclosure is an object that automatically moves, and includes the first path acquisition unit 70 and the movement control unit 72. The first path acquisition unit 70 acquires the first path R1 toward the transport vehicle V that is set based on the positional information on the transport vehicle V parked in the parking region ARC including the information on the position of the rear end portion Vb of the transport vehicle V, the information on the attitude of the transport vehicle V, and the information on the length of the transport vehicle V. The movement control unit 72 causes the mobile object 10 to move along the first path R1. The mobile object 10 moves along the first path R1, so that the mobile object 10 can appropriately approach the transport vehicle V.

### Reference Signs List

- 10: Mobile object
- 70: First path acquisition unit
- 72: Movement control unit
- 74: Detection control unit
- 76: Second path acquisition unit

- AR0: Parking region

- P: Target object

- R1: First path
- R2: Second path

- V: Transport vehicle

- Vb: Rear end portion

## Claims

1. A control method for a mobile object (10) that automatically moves, the control method comprising:
acquiring (S10) positional information of a transport vehicle (V) parked in a parking region (ARO), the positional information including information of a position of a rear end portion (Vb) of the transport vehicle (V), information of an attitude of the transport vehicle (V), and information of a length (VL) of the transport vehicle (V) in a coordinate system of a two-dimensional surface of the parking region (ARC);
setting (S14) a first path (R1) toward the transport vehicle (V) based on the positional information of the transport vehicle (V); and
causing (S18) the mobile object (10) to move along the first path (R1),
the control method further comprising:
acquiring (S12) relative target position information indicating a relative position of the target position with respect to the transport vehicle (V) using a method other than a method of directly detecting a target position in the transport vehicle (V) with a sensor,
wherein the setting (S14) of the first path (R1) includes setting (S14) the first path (R1) toward the target position based on the positional information of the transport vehicle (V) and the relative target position information,
wherein the relative target position information indicates coordinates of the target position in a coordinate system of the transport vehicle (V), and
wherein the acquiring (S12) of the relative target position information includes:
acquiring (S12) the relative target position information based on information indicating a number of target objects (P) disposed in the transport vehicle (V), or,
acquiring (S12) an identifier, which is given to each of positions at which the target objects (P) are disposed, as the relative target position information set in advance.

2. The control method for the mobile object (10) according to claim 1, wherein the acquiring (S10) of the positional information of the transport vehicle (V) includes acquiring the position of the rear end portion (Vb) and the attitude of the transport vehicle (V) by causing a sensor (S1) disposed in a facility (W) in which the parking region (ARO) is disposed to detect the rear end portion (Vb) of the transport vehicle (V) .

3. The control method for the mobile object (10) according to claim 1 or 2, wherein the acquiring (S10) of the positional information of the transport vehicle (V) includes acquiring vehicle type information indicating a vehicle type of the transport vehicle (V), and acquiring the information of the length (VL) of the transport vehicle (V) based on the vehicle type information.

4. The control method for the mobile object (10) according to claim 3, wherein, the acquiring (S10) of the positional information of the transport vehicle (V) includes acquiring the vehicle type information by causing a sensor (S2) disposed in a facility (W) in which the parking region (ARO) is disposed to detect a point indicating the vehicle type of the transport vehicle (V), and acquiring the information of the length (VL) of the transport vehicle (V) based on relation information indicating a relation between the vehicle type information and the length (VL) of the vehicle and based on the acquired vehicle type information.

5. The control method for the mobile object (10) according to claim 1 or 2, wherein the acquiring (S10) of the positional information of the transport vehicle (V) includes acquiring the information of the length (VL) of the transport vehicle (V) by causing a sensor (S3) disposed in a facility (W) in which the parking region (ARO) is disposed to detect the rear end portion (Vb) and a front end portion (Va) of the transport vehicle (V).

6. The control method for the mobile object (10) according to any one of claims 1 to 5, wherein
the transport vehicle (V) is in a state in which lateral doors (VB) are opened so that a surface (VBa) of each of the lateral doors (VB) faces upward in a vertical direction in the parking region (ARO), and,
the acquiring (S10) of the positional information of the transport vehicle (V) includes acquiring (S10) the positional information of the transport vehicle (V) by causing a sensor (S4) disposed on a ceiling of the parking region (ARO) to detect the lateral door.

7. The control method for the mobile object (10) according to any one of claims 1 to 6, further comprising:
causing (S20) a position and an attitude of a target object (P) disposed in the transport vehicle (V) to be detected;
setting (S22) a second path (R2) to a target arrival position at which a predetermined position and attitude are achieved with respect to the target object (P) based on the position and the attitude of the target object (P); and
switching (S24) the first path (R1) to the second path (R2) and causing the mobile object (10) to move along the second path (R2).

8. A mobile object (10) that automatically moves, the mobile object (10) comprising:
a first path acquisition unit (70) configured to acquire a first path (R1) toward a transport vehicle (V) parked in a parking region (ARO), the first path (R1) being set based on positional information of
the transport vehicle (V) and based on relative target position information, wherein the positional information includes information of
a position of a rear end portion (Vb) of the transport vehicle (V), information of
an attitude of the transport vehicle (V), and information of
a length (VL) of the transport vehicle (V) in a coordinate system of a two-dimensional surface of
the parking region (ARO), wherein the relative target position information indicates a relative position of the target position with respect to the transport vehicle (V) using a method other than a method of directly detecting a target position in the transport vehicle (V) with a sensor, the relative target position information being based on information indicating a number of target objects (P) disposed in the transport vehicle (V) or being set in advance and corresponding to an identifier which is given to each of positions at which the target objects (P) are disposed; and
a movement control unit (72) configured to cause the mobile object (10) to move along the first path (R1).

9. A non-transitory computer-readable storage medium storing a computer program for causing a computer to perform a control method for a mobile object (10) that automatically moves, the computer program comprising:
acquiring (S10, S14) a first path (R1) toward a transport vehicle (V) parked in a parking region (ARO), the first path (R1) being set based on positional information of the transport vehicle (V) and based on relative target position information, wherein the positional information includes information of
a position of a rear end portion (Vb) of the transport vehicle (V), information of
an attitude of the transport vehicle (V), and information of
a length (VL) of the transport vehicle (V) in a coordinate system of a two-dimensional surface of
the parking region (ARO), wherein the relative target position information indicates a relative position of the target position with respect to the transport vehicle (V) using a method other than a method of directly detecting a target position in the transport vehicle (V) with a sensor, the relative target position information being based on information indicating a number of target objects (P) disposed in the transport vehicle (V) or being set in advance and corresponding to an identifier which is given to each of positions at which the target objects (P) are disposed; and
causing (S18) the mobile object (10) to move along the first path (R1).

## Patentansprüche

1. Steuerverfahren für ein bewegliches Objekt (10), das sich automatisch bewegt, wobei das Steuerverfahren umfasst:
Erfassen (S10) einer Positionsinformation eines Transportfahrzeugs (V), das in einem Parkbereich (ARO) geparkt ist, wobei die Positionsinformation Informationen über eine Position eines hinteren Endabschnitts (Vb) des Transportfahrzeugs (V), Informationen über eine Lage des Transportfahrzeugs (V) und Informationen über eine Länge (VL) des Transportfahrzeugs (V) in einem Koordinatensystem einer zweidimensionalen Fläche des Parkbereichs (ARO) umfasst;
Einstellen (S14) einer ersten Bahn (R1) in Richtung des Transportfahrzeugs (V) anhand der Positionsinformation des Transportfahrzeugs (V); und
Veranlassen (S18) des Bewegens des beweglichen Objekts (10) entlang der ersten Bahn (R1),
Steuerverfahren, ferner umfassend:
Erfassen (S12) einer relativen Zielpositionsinformation, die eine relative Position der Zielposition in Bezug auf das Transportfahrzeug (V) angibt, unter Verwendung eines anderen Verfahrens als eines Verfahrens zum unmittelbaren Erkennen einer Zielposition in dem Transportfahrzeug (V) mit einem Sensor,
wobei das Einstellen (S14) der ersten Bahn (R1) das Einstellen (S14) der ersten Bahn (R1) in Richtung der Zielposition anhand der Positionsinformation des Transportfahrzeugs (V) und der relativen Zielpositionsinformation umfasst,
wobei die relative Zielpositionsinformation Koordinaten der Zielposition in einem Koordinatensystem des Transportfahrzeugs (V) angibt, und
wobei das Erfassen (S12) der relativen Zielpositionsinformation umfasst:
Erfassen (S12) der relativen Zielpositionsinformation anhand von Informationen, die eine Anzahl von Zielobjekten (P) angeben, die in dem Transportfahrzeug (V) angeordnet sind, oder
Erfassen (S12) einer Kennung, die jeder der Positionen, an denen die Zielobjekte (P) angeordnet sind, als die im Voraus eingestellte relative Zielpositionsinformation zugewiesen wird.

2. Steuerverfahren für das bewegliche Objekt (10) nach Anspruch 1, wobei das Erfassen (S10) der Positionsinformation des Transportfahrzeugs (V) das Erfassen der Position des hinteren Endabschnitts (Vb) und der Lage des Transportfahrzeugs (V) umfasst, indem ein Sensor (S1), der in einer Einrichtung (W) angeordnet ist, in der der Parkbereich (ARO) angeordnet ist, veranlasst wird, den hinteren Endabschnitt (Vb) des Transportfahrzeugs (V) zu erkennen.

3. Steuerverfahren für das bewegliche Objekt (10) nach Anspruch 1 oder 2, wobei das Erfassen (S10) der Positionsinformation des Transportfahrzeugs (V) das Erfassen von Fahrzeugtypinformationen umfasst, die einen Fahrzeugtyp des Transportfahrzeugs (V) angeben, und das Erfassen der Information über die Länge (VL) des Transportfahrzeugs (V) anhand der Fahrzeugtypinformationen.

4. Steuerverfahren für das bewegliche Objekt (10) nach Anspruch 3, wobei das Erfassen (S10) der Positionsinformation des Transportfahrzeugs (V) das Erfassen der Fahrzeugtypinformationen umfasst, indem ein Sensor (S2), der in einer Einrichtung (W) angeordnet ist, in der der Parkbereich (ARO) angeordnet ist, veranlasst wird, einen Punkt zu erkennen, der den Fahrzeugtyp des Transportfahrzeugs (V) anzeigt, und das Erfassen der Information über die Länge (VL) des Transportfahrzeugs (V) anhand von Beziehungsinformationen, die eine Beziehung zwischen den Fahrzeugtypinformationen und der Länge (VL) des Fahrzeugs angibt, und anhand der erfassten Fahrzeugtypinformationen.

5. Steuerverfahren für das bewegliche Objekt (10) nach Anspruch 1 oder 2, wobei das Erfassen (S10) der Positionsinformation des Transportfahrzeugs (V) das Erfassen der Information über die Länge (VL) des Transportfahrzeugs (V) umfasst, indem ein Sensor (S3), der in einer Einrichtung (W) angeordnet ist, in der der Parkbereich (ARO) angeordnet ist, veranlasst wird, den hinteren Endabschnitt (Vb) und einen vorderen Endabschnitt (Va) des Transportfahrzeugs (V) zu erkennen.

6. Steuerverfahren für das bewegliche Objekt (10) nach einem der Ansprüche 1 bis 5, wobei
das Transportfahrzeug (V) sich in einem Zustand befindet, in dem die Seitentüren (VB) geöffnet sind, so dass eine Fläche (VBa) jeder der Seitentüren (VB) im Parkbereich (ARO) in vertikaler Richtung nach oben gerichtet ist, und
das Erfassen (S10) der Positionsinformation des Transportfahrzeugs (V) das Erfassen (S10) der Positionsinformation des Transportfahrzeugs (V) umfasst, indem ein Sensor (S4), der an einer Decke des Parkbereichs (ARO) angeordnet ist, veranlasst wird, die Seitentür zu erkennen.

7. Steuerverfahren für das bewegliche Objekt (10) nach einem der Ansprüche 1 bis 6, ferner umfassend:
Veranlassen (S20) des Erkennens einer Position und einer Lage eines Zielobjekts (P), das im Transportfahrzeug (V) angeordnet ist;
Einstellen (S22) einer zweiten Bahn (R2) zu einer Zielankunftsposition, bei der eine vorbestimmte Position und Lage in Bezug auf das Zielobjekt (P) anhand der Position und der Lage des Zielobjekts (P) erzielt wird; und
Umschalten (S24) der ersten Bahn (R1) auf die zweite Bahn (R2) und Veranlassen des beweglichen Objekts (10), sich entlang der zweiten Bahn (R2) zu bewegen.

8. Bewegliches Objekt (10), das sich automatisch bewegt, wobei das bewegliche Objekt (10) aufweist:
eine erste Bahnerfassungseinheit (70), die so konfiguriert ist, dass sie eine erste Bahn (R1) in Richtung eines Transportfahrzeugs (V) erfasst, das in einem Parkbereich (ARO) geparkt ist, wobei die erste Bahn (R1) anhand einer Positionsinformation des Transportfahrzeugs (V) und anhand einer relativen Zielpositionsinformation eingestellt wird, wobei die Positionsinformation Informationen über eine Position eines hinteren Endabschnitts (Vb) des Transportfahrzeugs (V), Informationen über eine Lage des Transportfahrzeugs (V) und Informationen über eine Länge (VL) des Transportfahrzeugs (V) in einem Koordinatensystem einer zweidimensionalen Fläche des Parkbereichs (ARO) umfasst, wobei die relative Zielpositionsinformation eine relative Position der Zielposition in Bezug auf das Transportfahrzeug (V) unter Verwendung eines anderen Verfahrens als eines Verfahrens zum unmittelbaren Erkennen einer Zielposition in dem Transportfahrzeug (V) mit einem Sensor anzeigt, wobei die relative Zielpositionsinformation auf einer Information basiert, die eine Anzahl von Zielobjekten (P) angibt, die in dem Transportfahrzeug (V) angeordnet sind oder im Voraus eingestellt wird und einer Kennung entspricht, die jeder der Positionen, an denen die Zielobjekte (P) angeordnet sind, zugewiesen wird; und
eine Bewegungssteuereinheit (72), die so konfiguriert ist, dass sie das bewegliche Objekt (10) veranlasst, sich entlang der ersten Bahn (R1) zu bewegen.

9. Nicht-flüchtiges computerlesbares Speichermedium, das ein Computerprogramm speichert, um einen Computer zu veranlassen, ein Steuerverfahren für ein bewegliches Objekt (10) durchzuführen, das sich automatisch bewegt, wobei das Computerprogramm umfasst:
Erfassen (S10, S14) einer ersten Bahn (R1) in Richtung eines Transportfahrzeugs (V), das in einem Parkbereich (ARO) geparkt ist, wobei die erste Bahn (R1) anhand einer Positionsinformation des Transportfahrzeugs (V) und anhand einer relativen Zielpositionsinformation eingestellt wird, wobei die Positionsinformation Informationen über eine Position eines hinteren Endabschnitts (Vb) des Transportfahrzeugs (V), Informationen über eine Lage des Transportfahrzeugs (V) und Informationen über eine Länge (VL) des Transportfahrzeugs (V) in einem Koordinatensystem einer zweidimensionalen Fläche des Parkbereichs (ARO) umfasst, wobei die relative Zielpositionsinformation eine relative Position der Zielposition in Bezug auf das Transportfahrzeug (V) unter Verwendung eines anderen Verfahrens als eines Verfahrens zum unmittelbaren Erkennen einer Zielposition in dem Transportfahrzeug (V) mit einem Sensor anzeigt, wobei die relative Zielpositionsinformation auf einer Information basiert, die eine Anzahl von Zielobjekten (P) angibt, die in dem Transportfahrzeug (V) angeordnet sind, oder im Voraus eingestellt wird und einer Kennung entspricht, die jeder der Positionen, an denen die Zielobjekte (P) angeordnet sind, zugewiesen wird; und
Veranlassen (S18) des Bewegens des beweglichen Objekts (10) entlang der ersten Bahn (R1).

## Revendications

1. Procédé de commande d'un objet mobile (10) qui se déplace automatiquement, le procédé de commande comprenant :
d'acquérir (S10) des informations de position d'un véhicule de transport (V) stationné dans une zone de stationnement (ARO), les informations de position comportant des informations sur une position d'une partie d'extrémité arrière (Vb) du véhicule de transport (V), des informations sur une attitude du véhicule de transport (V) et des informations sur une longueur (VL) du véhicule de transport (V) dans un système de coordonnées d'une surface bidimensionnelle de la zone de stationnement (ARO) ;
de définir (S14) une première trajectoire (R1) vers le véhicule de transport (V) sur la base des informations de position du véhicule de transport (V) ; et
d'amener (S18) l'objet mobile (10) à se déplacer le long de la première trajectoire (R1),
le procédé de commande comprenant en outre :
d'acquérir (S12) des informations de position cible relative indiquant une position relative de la position cible par rapport au véhicule de transport (V) en utilisant un procédé autre qu'un procédé de détection directe d'une position cible dans le véhicule de transport (V) à l'aide d'un capteur,
dans lequel la définition (S14) de la première trajectoire (R1) comporte de définir (S14) la première trajectoire (R1) vers la position cible sur la base des informations de position du véhicule de transport (V) et des informations de position cible relative,
dans lequel les informations de position cible relative indiquent les coordonnées de la position cible dans un système de coordonnées du véhicule de transport (V), et
dans lequel l'acquisition (S12) des informations de position cible relative comporte :
d'acquérir (S12) les informations de position cible relative sur la base d'informations indiquant un nombre d'objets cibles (P) disposés dans le véhicule de transport (V), ou
d'acquérir (S12) un identifiant qui est donné à chacune des positions auxquelles les objets cibles (P) sont disposés, en tant qu'informations de position cible relative définies à l'avance.

2. Procédé de commande de l'objet mobile (10) selon la revendication 1, dans lequel l'acquisition (S10) des informations de position du véhicule de transport (V) comporte d'acquérir la position de la partie d'extrémité arrière (Vb) et l'attitude du véhicule de transport (V) en amenant un capteur (S1) disposé dans une installation (W) dans laquelle la zone de stationnement (ARO) est disposée, à détecter la partie d'extrémité arrière (Vb) du véhicule de transport (V).

3. Procédé de commande de l'objet mobile (10) selon la revendication 1 ou 2, dans lequel l'acquisition (S10) des informations de position du véhicule de transport (V) comporte d'acquérir des informations de type de véhicule indiquant un type de véhicule du véhicule de transport (V), et d'acquérir les informations sur la longueur (VL) du véhicule de transport (V) sur la base des informations de type de véhicule.

4. Procédé de commande de l'objet mobile (10) selon la revendication 3, dans lequel l'acquisition (S10) des informations de position du véhicule de transport (V) comporte d'acquérir les informations de type de véhicule en amenant un capteur (S2) disposé dans une installation (W) dans laquelle la zone de stationnement (ARO) est disposée, à détecter un point indiquant le type de véhicule du véhicule de transport (V), et d'acquérir les informations sur la longueur (VL) du véhicule de transport (V) sur la base d'informations de relation indiquant une relation entre les informations de type de véhicule et la longueur (VL) du véhicule et sur la base des informations de type de véhicule acquises.

5. Procédé de commande de l'objet mobile (10) selon la revendication 1 ou 2, dans lequel l'acquisition (S10) des informations de position du véhicule de transport (V) comporte d'acquérir les informations sur la longueur (VL) du véhicule de transport (V) en amenant un capteur (S3) disposé dans une installation (W) dans laquelle la zone de stationnement (ARO) est disposée, à détecter la partie d'extrémité arrière (Vb) et une partie d'extrémité avant (Va) du véhicule de transport (V).

6. Procédé de commande de l'objet mobile (10) selon l'une quelconque des revendications 1 à 5, dans lequel
le véhicule de transport (V) est dans un état dans lequel des portes latérales (VB) sont ouvertes de sorte qu'une surface (VBa) de chacune des portes latérales (VB) soit orientée vers le haut dans une direction verticale dans la zone de stationnement (ARO) et,
l'acquisition (S10) des informations de position du véhicule de transport (V) comporte d'acquérir (S10) les informations de position du véhicule de transport (V) en amenant un capteur (S4) disposé sur un plafond de la zone de stationnement (ARO) à détecter la porte latérale.

7. Procédé de commande de l'objet mobile (10) selon l'une quelconque des revendications 1 à 6, comprenant en outre :
de provoquer (S20) la détection d'une position et d'une attitude d'un objet cible (P) disposé dans le véhicule de transport (V) ;
de définir (S22) une deuxième trajectoire (R2) jusqu'à une position d'arrivée cible à laquelle une position et une attitude prédéterminées sont atteintes par rapport à l'objet cible (P) sur la base de la position et de l'attitude de l'objet cible (P) ; et
passer (S24) de la première trajectoire (R1) à la deuxième trajectoire (R2) et amener l'objet mobile (10) à se déplacer le long de la deuxième trajectoire (R2).

8. Objet mobile (10) qui se déplace automatiquement, l'objet mobile (10) comprenant :
une unité d'acquisition de première trajectoire (70) configurée pour acquérir une première trajectoire (R1) vers un véhicule de transport (V) stationné dans une zone de stationnement (ARO), la première trajectoire (R1) étant définie sur la base d'informations de position du véhicule de transport (V) et sur la base d'informations de position cible relative, dans lequel les informations de position comportent des informations sur une position d'une partie d'extrémité arrière (Vb) du véhicule de transport (V), des informations sur une attitude du véhicule de transport (V) et des informations sur une longueur (VL) du véhicule de transport (V) dans un système de coordonnées d'une surface bidimensionnelle de la zone de stationnement (ARO), dans lequel les informations de position cible relative indiquent une position relative de la position cible par rapport au véhicule de transport (V) en utilisant un procédé autre qu'un procédé de détection directe d'une position cible dans le véhicule de transport (V) à l'aide d'un capteur, les informations de position cible relative étant basées sur des informations indiquant un nombre d'objets cibles (P) disposés dans le véhicule de transport (V) ou étant définies à l'avance et correspondant à un identifiant qui est donné à chacune des positions auxquelles les objets cibles (P) sont disposés ; et
une unité de commande de déplacement (72) configurée pour amener l'objet mobile (10) à se déplacer le long de la première trajectoire (R1).

9. Support de stockage non transitoire lisible par ordinateur stockant un programme informatique pour amener un ordinateur à mettre en œuvre un procédé de commande d'un objet mobile (10) qui se déplace automatiquement, le programme informatique comprenant :
d'acquérir (S10, S14) une première trajectoire (R1) vers un véhicule de transport (V) stationné dans une zone de stationnement (ARO), la première trajectoire (R1) étant définie sur la base d'informations de position du véhicule de transport (V) et sur la base d'informations de position cible relative, dans lequel les informations de position comportent des informations sur une position d'une partie d'extrémité arrière (Vb) du véhicule de transport (V), des informations sur une attitude du véhicule de transport (V) et des informations sur une longueur (VL) du véhicule de transport (V) dans un système de coordonnées d'une surface bidimensionnelle de la zone de stationnement (ARO), dans lequel les informations de position cible relative indiquent une position relative de la position cible par rapport au véhicule de transport (V) en utilisant un procédé autre qu'un procédé de détection directe d'une position cible dans le véhicule de transport (V) à l'aide d'un capteur, les informations de position cible relative étant basées sur des informations indiquant un nombre d'objets cibles (P) disposés dans le véhicule de transport (V) ou étant définies à l'avance et correspondant à un identifiant qui est donné à chacune des positions auxquelles les objets cibles (P) sont disposés ; et
d'amener (S18) l'objet mobile (10) à se déplacer le long de la première trajectoire (R1).
